(19) **Europäisches Patentamt / European Patent Office / Office européen des brevets**

(11) **EP 4 644 578 A1**

(12) **EUROPEAN PATENT APPLICATION**
published in accordance with Art. 153(4) EPC

(43) Date of publication:
05.11.2025 Bulletin 2025/45

(21) Application number: 23911276.6

(22) Date of filing: 31.08.2023

(51) International Patent Classification (IPC):
$C22C\ 38/00$ (2006.01)  $C21D\ 8/02$ (2006.01)
$C21D\ 9/46$ (2006.01)  $C22C\ 38/58$ (2006.01)

(52) Cooperative Patent Classification (CPC):
C21D 8/02; C21D 9/46; C22C 38/00; C22C 38/58

(86) International application number:
PCT/JP2023/031972

(87) International publication number:
WO 2024/142492 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.12.2022 JP 2022208520

(71) Applicant: NIPPON STEEL CORPORATION
Chiyoda-ku
Tokyo 100-8071 (JP)

(72) Inventors:
• TSUTSUI, Kazumasa
Tokyo 100-8071 (JP)
• SHUTO, Hiroshi
Tokyo 100-8071 (JP)

(74) Representative: Zimmermann & Partner
Patentanwälte mbB
Postfach 330 920
80069 München (DE)

(54) **HOT-ROLLED STEEL SHEET**

(57) This hot-rolled steel sheet has a predetermined chemical composition, in a microstructure at a position of 1/4 from a surface in a sheet thickness direction, in terms of area%, martensite and tempered martensite is more than 92.0% and 100.0% or less in total, residual austenite is less than 3.0%, ferrite is less than 5.0%, an E value is 11.0 or more, an I value is less than 1.020, a CS value is $-8.0\times10^5$ to $8.0\times10^5$, a standard deviation of Mn concentrations is 0.60 mass% or less, at the surface, a number density of Si-Al-Cr oxides having a circle equivalent radius of 0.500 $\mu$m or more is $2.0\times10^3$ pieces/cm$^2$ or less, and a number density of Si-Al-Cr oxides having a circle equivalent radius of 0.005 $\mu$m to 0.050 $\mu$m is $1.0\times10^5$ pieces/cm$^2$ or more.

FIG. 1

(a) (b)

SHEAR DROOP
SHEARED SURFACE
A — y — B
x
FRACTURED SURFACE
BURR

EP 4 644 578 A1

**Description**

TECHNICAL FIELD OF THE INVENTION

The present invention relates to a hot-rolled steel sheet.

Priority is claimed on Japanese Patent Application No. 2022-208520, filed on December 26, 2022, the content of which is incorporated herein by reference.

BACKGROUND ART

In recent years, from the viewpoint of protecting the global environment, efforts have been made to reduce the amount of carbon dioxide gas emitted in many fields. Vehicle manufacturers are also actively developing techniques for reducing the weight of vehicle bodies for the purpose of reducing fuel consumption. However, it is not easy to reduce the weight of vehicle bodies since the emphasis is placed on improvement in collision resistance to secure the safety of the occupants.

In order to achieve both vehicle body weight reduction and collision resistance, an investigation has been conducted to make a member thin by using a high-strength steel sheet. Therefore, there is a strong demand for a steel sheet having both high strength and excellent formability. In order to meet this demand, several techniques have been conventionally proposed. Since there are various working methods for vehicle members, the required formability differs depending on members to which the working methods are applied. Among these, limit fracture sheet thickness reduction ratio and hole expansibility is placed as important indices for formability.

The limit fracture sheet thickness reduction ratio is a value calculated from a sheet thickness of a tensile test piece before fracture and a minimum value of a sheet thickness of the tensile test piece after fracture. When the limit fracture sheet thickness reduction ratio is high, it is preferable since early fracture become to be hardly occurred when tensile strain is applied during press forming.

Vehicle members are formed by press forming, and the press-formed blank sheet is often manufactured by highly productive shearing working. A blank sheet manufactured by shearing working needs to be excellent in terms of the end surface accuracy after shearing working.

For example, when a linearity of a boundary between a fractured surface and a sheared surface at the sheared end surface is low, the accuracy of the sheared end surface significantly deteriorates.

Furthermore, for steel sheets applied to vehicle members, further improved corrosion resistance is required.

For example, Patent Document 1 discloses a hot-rolled steel sheet that can be used as a raw material for cold-rolled steel sheet with excellent surface properties after press forming, in which the degrees of Mn segregation and P segregation in the center part of sheet thickness are controlled.

PRIOR ART DOCUMENT

Patent Document

Patent Document 1: WO2020/044445

Non-Patent Document

Non-Patent Document 1: J. Webel, J. Gola, D. Britz, F. Mucklich, Materials Characterization 144 (2018) 584-596
Non-Patent Document 2: D. L. Naik, H. U. Sajid, R. Kiran, Metals 2019, 9, 546
Non-Patent Document 3: K. Zuiderveld, Contrast Limited Adaptive Histogram Equalization, Chapter VIII. 5, Graphics Gems IV. P. S. Heckbert (Eds.), Cambridge, MA, Academic Press, 1994, pp. 474-485

SUMMARY OF INVENTION

Technical Problem

However, in Patent Document 1, a limit fracture sheet thickness reduction ratio, shearing property, and corrosion resistance of the hot-rolled steel sheet are not considered.

The present invention has been made in view of the circumstances described above, and an object of the present invention is to provide a hot-rolled steel sheet having high strength and limit fracture sheet thickness reduction ratio, excellent hole expansibility, shearing property and corrosion resistance.

Solution to Problem

The gist of the present invention is as follows.

(1) A hot-rolled steel sheet according to one aspect of the present invention comprising, in terms of mass%, as a chemical composition,

C: 0.040% to 0.250%,
Si: 0.40% to 1.00%,
Mn: 1.00% to 4.00%,
sol. Al: 0.100% to 0.500%,
Cr: 0.50% to 2.00%,
P: 0.100% or less,
S: 0.0300% or less,
N: 0.1000% or less,
O: 0.0100% or less,
Ti: 0% to 0.300%,
Nb: 0% to 0.100%,
V: 0% to 0.500%,
Cu: 0% to 2.00%,
Mo: 0% to 1.00%,
Ni: 0% to 2.00%,
B: 0% to 0.0100%,
Ca: 0% to 0.0200%,
Mg: 0% to 0.0200%,
REM: 0% to 0.1000%,
Bi: 0% to 0.0200%,
As: 0% to 0.100%,
Zr: 0% to 1.00%,
Co: 0% to 1.00%,
Zn: 0% to 1.00%,
W: 0% to 1.00%,
Sn: 0% to 0.05%,
a remainder comprising Fe and impurities, and
the following formula (A) is satisfied,
in a microstructure at a position of 1/4 from a surface in a sheet thickness direction,
in terms of area%,
martensite and tempered martensite is more than 92.0% and 100.0% or less in total,
residual austenite is less than 3.0%,
ferrite is less than 5.0%, and
an Entropy value indicated by the following formula (1) is 11.0 or more, an Inverse difference normalized value indicated by the following formula (2) is less than 1.020, and a Cluster Shade value indicated by the following formula (3) is $-8.0 \times 10^5$ to $8.0 \times 10^5$, which are obtained by analyzing SEM images of the microstructure with a gray level co-occurrence matrices method,
a standard deviation of Mn concentrations is 0.60 mass% or less,
at the surface, a number density of Si-Al-Cr oxides having a circle equivalent radius of 0.500 $\mu$m or more is $2.0 \times 10^3$ pieces/cm$^2$ or less, and a number density of Si-Al-Cr oxides having a circle equivalent radius of 0.005 $\mu$m to 0.050 $\mu$m is $1.0 \times 10^5$ pieces/cm$^2$ or more,

$$Zr+Co+Zn+W \leq 1.00\% \ ...(A),$$

,

here, each element symbol in the formula (A) indicates the content of the element in terms of mass %, and 0 is substituted when the element is not contained,

P(i,j) in the following formulas (1) to (5) is a gray level co-occurrence matrix, L in the following formula (2) is possible Quantization levels of grayscale of the SEM images, i and j in the following formulas (2) and (3) are natural numbers from 1 to the L, $\mu_x$ and $\mu_y$ in the following formula (3) are indicated by the in the following formulas (4) and (5).

[Formula 1]

$$Entropy = -\sum_i \sum_j P(i,j).\log(P(i,j)) \qquad \cdots \quad (1)$$

[Formula 2]

$$Inverse\ difference\ normalized = \sum_i \sum_j \frac{P(i,j)}{1+\dfrac{|i-j|}{L}} \qquad \cdots \quad (2)$$

[Formula 3]

$$Cluster\ Shade = \sum_i \sum_j \left(i+j-\mu_x-\mu_y\right)^3 P(i,j) \qquad \cdots \quad (3)$$

[Formula 4]

$$\mu_x = \sum_i \sum_j i\left(P(i,j)\right) \qquad \cdots \quad (4)$$

[Formula 5]

$$\mu_y = \sum_i \sum_j j\left(P(i,j)\right) \qquad \cdots \quad (5)$$

(2) The hot-rolled steel sheet according to (1), in which the chemical composition may comprise, in terms of mass%, one or two or more selected from the group consisting of

Ti: 0.001% to 0.300%,
Nb: 0.001% to 0.100%,
V: 0.001% to 0.500%,
Cu: 0.01% to 2.00%,
Mo: 0.01% to 1.00%,
Ni: 0.02% to 2.00%,
B: 0.0001% to 0.0100%,
Ca: 0.0005% to 0.0200%,
Mg: 0.0005% to 0.0200%,
REM: 0.0005% to 0.1000%,
Bi: 0.0005% to 0.0200%,
As: 0.001% to 0.100%,
Zr: 0.01% to 1.00%,
Co: 0.01% to 1.00%,
Zn: 0.01% to 1.00%,
W: 0.01% to 1.00%, and
Sn: 0.01% to 0.05%.

Advantageous Effects of Invention

According to the above aspect according to the present invention, it is possible to obtain a hot-rolled steel sheet having high strength and limit fracture sheet thickness reduction ratio, excellent hole expansibility, shearing property, and corrosion resistance.

The hot-rolled steel sheet according to the above aspect of the present invention is suitable as an industrial material used for vehicle members, mechanical structural members, and building members.

BRIEF DESCRIPTION OF DRAWINGS

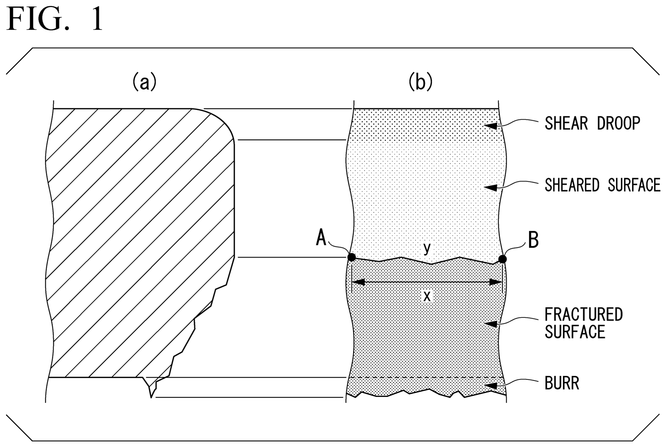

[FIG. 1] A figure for explaining a measuring method of a linearity of a boundary between a fractured surface and a sheared surface at an end surface after shearing working.

DESCRIPTION OF EMBODIMENTS

The chemical composition and microstructure of a hot-rolled steel sheet according to the present embodiment will be more specifically described below. However, the present invention is not limited only to a configuration disclosed in the present embodiment, and various modifications can be made without departing from the scope of the gist of the present invention.

The numerical limit range described below with "to" in between includes the lower limit and the upper limit. Regarding the numerical value indicated by "less than" or "more than", the value does not fall within the numerical range. In the following description, % regarding the chemical composition is mass% unless particularly otherwise specified.

Chemical Composition

The chemical composition of the hot-rolled steel sheet according to the present embodiment includes, in terms of mass%, C: 0.040% to 0.250%, Si: 0.40% to 1.00%, Mn: 1.00% to 4.00%, sol. Al: 0.100% to 0.500%, Cr: 0.50% to 2.00%, P: 0.100% or less, S: 0.0300% or less, N: 0.1000% or less, O: 0.0100% or less, and a remainder of Fe and impurities.

Each element will be described in detail below.

C: 0.040% to 0.250%

C increases the area ratio of a hard phase. When the C content is less than 0.040%, a desired strength and hole expansibility cannot be obtained by increasing area ratios of ferrite and the remainder in microstructure of hot-rolled steel sheet. Therefore, the C content is set to 0.040% or more. The C content is preferably 0.045% or more, and more preferably 0.050% or more.

On the other hand, when the C content is more than 0.250%, flat cementite structures increase, the E value decreases due to the influence of generations of carbide regions with small brightness difference. Therefore, the C content is set to 0.250% or less. The C content is preferably 0.200% or less, or 0.150% or less.

Si: 0.40% to 1.00%

Si has an action of improving the hole expansibility of the hot-rolled steel sheet by promoting the formation of ferrite and has an action of increasing the strength of the hot-rolled steel sheet by the solid solution strengthening of ferrite. In addition, Si has an action of making steel sound by deoxidation (suppressing the occurrence of a defect such as a blowhole in steel). When the Si content is less than 0.40%, an effect by the action cannot be obtained. Therefore, the Si content is set to 0.40% or more. The Si content is preferably 0.50% or more and more preferably 0.60% or more.

On the other hand, when the Si content is more than 1.00%, the number density of oxides at the surface of the steel sheet increases and the chemical convertibility deteriorates. In addition, ferrite is likely to generate excessively, resulting in decrease of the strength. Therefore, the Si content is set to 1.00% or less. The Si content is preferably 0.90% or less, and more preferably 0.80% or less.

Mn: 1.00% to 4.00%

Mn has an action of suppressing ferritic transformation to enhance strength of the hot-rolled steel sheet. When the Mn content is less than 1.00%, a desired strength cannot be obtained in the hot-rolled steel sheet. Therefore, the Mn content is set to 1.00% or more. The Mn content is preferably 1.10% or more and more preferably 1.20% or more.

On the other hand, when the Mn content is more than 4.00%, the standard deviation of Mn concentrations cannot be decreased. Therefore, the Mn content is set to 4.00% or less. The Mn content is preferably 3.50% or less or 3.00% or less, and more preferably 2.50% or less or 2.00% or less.

sol. Al: 0.100% to 0.500%

Similar to Si, Al has an action of making steel sound by deoxidizing and has an action of enhancing the hole expansibility of the hot-rolled steel sheet by promoting the formation of ferrite. When the sol. Al content is less than 0.100%, an effect by the action cannot be obtained. Therefore, the sol. Al content is set to 0.100% or more. The sol. Al content is preferably 0.200% or more.

On the other hand, when the sol. Al content is more than 0.500%, the above effects are saturated, which is not economically preferable. Therefore, the sol. Al content is set to 0.500% or less. The sol. Al content is preferably 0.450% or less, more preferably 0.400% or less, and still more preferably 0.350% or less.

Note that the sol. Al means acid-soluble Al and refers to solid solution Al present in steel in a solid solution state.

Cr: 0.50% to 2.00%

Cr has an action of improving hardenability of the hot-rolled steel sheet. In addition, Cr forms oxides with Si and Al. When the Cr content is less than 0.50%, the effect of improving hardenability cannot be obtained. In addition, the Si-Al-Cr oxides cannot be preferably formed at the surface. Therefore, the Cr content is set to 0.50% or more. The Cr content is preferably 0.60% or more, more preferably 0.70% or more, and still more preferably 0.80% or more.

On the other hand, when the Cr content is more than 2.00%, the chemical convertibility of the hot-rolled steel sheet significantly deteriorates. Therefore, the Cr content is set to 2.00% or less. The Cr content is preferably 1.80% or less, and more preferably 1.60% or less.

P: 0.100% or less

P has an action of increasing the strength of the hot-rolled steel sheet by solid solution strengthening. Therefore, P may be positively contained. However, P is an element that is easily segregated, and when the P content exceeds 0.100%, the deterioration of the hole expansibility and the limit fracture sheet thickness reduction ratio attributed to boundary segregation becomes significant. Therefore, the P content is set to 0.100% or less. The P content is preferably 0.030% or less. The lower limit of the P content is not necessary to be particularly specified and may be 0%, but preferably 0.001% or more from the view point of the refining cost.

S: 0.0300% or less

S forms a sulfide-based inclusion in steel to decrease the hole expansibility and the limit fracture sheet thickness reduction ratio of the hot-rolled steel sheet. When the S content is more than 0.0300%, the hole expansibility and the limit fracture sheet thickness reduction ratio of the hot-rolled steel sheet significantly deteriorates. Therefore, the S content is set to 0.0300% or less. The S content is preferably 0.0050% or less. The lower limit of the S content is not necessary to be particularly specified and may be 0%, but preferably 0.0001% or more from the view point of the refining cost.

N: 0.1000% or less

N has an action of decreasing the hole expansibility and the limit fracture sheet thickness reduction ratio of the hot-rolled steel sheet. When the N content is more than 0.1000%, the hole expansibility and the limit fracture sheet thickness reduction ratio of the hot-rolled steel sheet significantly deteriorates. Therefore, the N content is set to 0.1000% or less. The N content is preferably 0.0800% or less, more preferably 0.0700%, and still more preferably 0.0100% or less. The lower limit of the N content is not necessary to be particularly specified and may be 0%, but in a case where one or two or more of Ti, Nb, and V are contained to further refine the microstructure, the N content is preferably set to 0.0010% or more, and more preferably set to 0.0020% or more to promote the precipitation of a carbonitride.

O: 0.0100% or less

When a large content of O is contained in steel, O forms a coarse oxide that becomes the starting point of fracture and causes brittle fracture and hydrogen-induced cracks. Therefore, the O content is set to 0.0100% or less. The O content is preferably 0.0080% or less and more preferably 0.0050% or less. The O content may be 0%, but the O content may be set to 0.0005% or more or 0.0010% or more to disperse a large number of fine oxides when molten steel is deoxidized.

The remainder of the chemical composition of the hot-rolled steel sheet according to the present embodiment may be Fe and an impurities. In the present embodiment, the impurities mean substances that are incorporated from ore as a raw material, a scrap, manufacturing environment, or the like and/or substances that are permitted to an extent that the hot-rolled steel sheet according to the present embodiment is not adversely affected.

Instead of a part of Fe, the hot-rolled steel sheet according to the present embodiment may contain the following elements as optional elements. In a case where these optional elements are not contained, the lower limit of the content thereof is 0%. Hereinafter, the optional elements will be described in detail.

> Ti: 0.001% to 0.300%
> Nb: 0.001% to 0.100%
> V: 0.001% to 0.500%

Ti, Nb, and V are elements that are finely precipitated in steel as a carbide and a nitride and improve the strength of steel by precipitation hardening. In order to more reliably obtain the effect by the action, it is preferable to set the content of any one of Ti, Nb, and V to 0.001% or more. The content of each of Ti, Nb, and V is preferably 0.010% or more.

On the other hand, when the Ti content exceeds 0.300%, the Nb content exceeds 0.100%, or the V content exceeds 0.500%, the workability of the hot-rolled steel sheet deteriorates. In addition, it is not economically advantageous to contain these elements excessively. Therefore, the Ti content is set to 0.300% or less, the Nb content is set to 0.100% or less, and the V content is set to 0.500% or less.

> Cu: 0.01% to 2.00%
> Mo: 0.01% to 1.00%
> Ni: 0.02% to 2.00%,
> B: 0.0001% to 0.0100%

All of Cu, Mo, Ni, and B have an action of enhancing the hardenability of the hot-rolled steel sheet. In addition, Cu and Mo have an action of being precipitated as a carbide in steel to increase the strength of the hot-rolled steel sheet. Furthermore, in a case where Cu is contained, Ni has an action of effectively suppressing the grain boundary cracking of a slab caused by Cu. Therefore, one or two or more of these elements may be contained.

As described above, Cu has an action of enhancing the hardenability of the hot-rolled steel sheet and an action of being precipitated as a carbide in steel at a low temperature to increase the strength of the hot-rolled steel sheet. In order to more reliably obtain the effect by the action, the Cu content is preferably set to 0.01% or more and more preferably set to 0.05% or more. However, when the Cu content is more than 2.00%, grain boundary cracking may occur in the slab in some cases. Therefore, the Cu content is set to 2.00% or less. The Cu content is preferably 1.50% or less and more preferably 1.00% or less.

As described above, Mo has an action of enhancing the hardenability of the hot-rolled steel sheet and an action of being precipitated as a carbide in steel to increase the strength of the hot-rolled steel sheet. In order to more reliably obtain the effect by the action, the Mo content is preferably set to 0.01% or more and more preferably set to 0.02% or more. However, even when the Mo content is set to more than 1.00%, the effect by the action is saturated, which is not economically preferable. Therefore, the Mo content is set to 1.00% or less. The Mo content is preferably 0.50% or less and more preferably 0.20% or less.

As described above, Ni has an action of enhancing the hardenability of the hot-rolled steel sheet. In addition, in a case where Cu is contained, Ni has an action of effectively suppressing the grain boundary cracking of the slab caused by Cu. In order to more reliably obtain the effect by the action, the Ni content is preferably set to 0.02% or more. Since Ni is an expensive element, it is not economically preferable to contain a large content of Ni. Therefore, the Ni content is set to 2.00% or less.

As described above, B has an action of enhancing the hardenability of the hot-rolled steel sheet. In order to more reliably obtain the effect by this action, the B content is preferably set to 0.0001% or more and more preferably set to 0.0002% or more. However, when the B content is more than 0.0100%, the formability of the hot-rolled steel sheet significantly deteriorates, and thus the B content is set to 0.0100% or less. The B content is preferably set to 0.0050% or less.

> Ca: 0.0005% to 0.0200%
> Mg: 0.0005% to 0.0200%
> REM: 0.0005% to 0.1000%
> Bi: 0.0005% to 0.0200%

All of Ca, Mg, and REM have an action of enhancing the hole expansibility of the hot-rolled steel sheet by adjusting the shape of inclusions in steel to a preferable shape. In addition, Bi has an action of enhancing the hole expansibility of the hot-rolled steel sheet by refining the solidification structure. Therefore, one or two or more of these elements may be contained. In order to more reliably obtain the effect by the action, it is preferable that the content of any one or more of Ca, Mg, REM, and Bi are set to 0.0005% or more. However, when the Ca content or Mg content is more than 0.0200% or when the REM content is more than 0.1000%, an inclusion is excessively formed in steel, and thus the hole expansibility of the hot-rolled steel sheet may be conversely decreased in some cases. In addition, even when the Bi content is set to more than 0.0200%, the above effect by the action is saturated, which is not economically preferable. Therefore, the Ca content and the Mg content are set to 0.0200% or less, the REM content is set to 0.1000% or less, and the Bi content is set to 0.0200% or less. The Bi content is preferably 0.0100% or less.

Here, REM refers to a total of 17 elements consisting of Sc, Y, and lanthanoids, and the REM content refers to the total content of these elements. In the case of the lanthanoids, the lanthanoids are industrially added in the form of misch metal.

As: 0.001% to 0.100%

As lowers an austenitizing temperature and thus refines the prior austenite grains, thereby contributing for an improvement of the hole expansibility of the hot-rolled steel sheet. In order to reliably obtain the effects, the As content is preferably set to 0.001% or more.

On the other hand, since the above effects are saturated even in a case where a large content of As is contained, the As content is set to 0.100% or less.

Zr: 0.01% to 1.00%

Co: 0.01% to 1.00%

Zn: 0.01% to 1.00%

W: 0.01% to 1.00%

$$Zr+Co+Zn+W \leq 1.00\% \ \ldots(A)$$

Here, each element symbol in the formula (A) indicates the content of the element in terms of mass %, and 0 is substituted when the element is not contained.

Regarding Zr, Co, Zn, and W, the present inventors have confirmed that, even when a total of 1.00% or less of these elements are contained, the effect of the hot-rolled steel sheet according to the present embodiment is not impaired. Therefore, one or two or more of Zr, Co, Zn, or W may be contained in a total of 1.00% or less. That is, the value of the left side of the formula (A) may be set to 1.00% or less. Since Zr, Co, Zn, and W may not be contained, the respective content may be 0%. In order to improve the strength by solid solution strengthening of the steel sheet, the respective content of Zr, Co, Zn, and W may be 0.01% or more.

Sn: 0% to 0.05%

In addition, the present inventors have confirmed that, even when a small content of Sn is contained, the effect of the hot-rolled steel sheet according to the present embodiment is not impaired. However, when a large content of Sn is contained, a defect may be generated during hot rolling, and thus the Sn content is set to 0.05% or less. Since Sn may not be contained, the Sn content may be 0%. In order to improve the corrosion resistance of the hot-rolled steel sheet, the Sn content may be set to 0.01% or more.

The chemical composition of the above hot-rolled steel sheet may be measured by a general analytical method. For example, inductively coupled plasma-atomic emission spectrometry (ICP-AES) may be used for measurement. sol. Al may be measured by the ICP-AES using a filtrate after a sample is decomposed with an acid by heating. C and S may be measured by using a combustion-infrared absorption method, N may be measured by using the inert gas melting-thermal conductivity method, and O may be measured using an inert gas melting-non-dispersive infrared absorption method.

When a plating layer is provided on the surface of the hot-rolled steel sheet, the chemical composition may be analyzed after the plating layer is removed by mechanical grinding or the like as necessary.

Microstructure of Hot-Rolled Steel Sheet

Next, the microstructure of the hot-rolled steel sheet according to the present embodiment will be described.

In the microstructure at a position of 1/4 from a surface in a sheet thickness direction of the hot-rolled steel sheet according to the present embodiment, in terms of area%, martensite and tempered martensite is more than 92.0% and 100.0% or less in total, residual austenite is less than 3.0%, ferrite is less than 5.0%, an Entropy value indicated by the following formula (1) is 11.0 or more, an Inverse difference normalized value indicated by the following formula (2) is less than 1.020, and a Cluster Shade value indicated by the following formula (3) is $-8.0 \times 10^5$ to $8.0 \times 10^5$, which are obtained by analyzing SEM images of the microstructure with a gray level co-occurrence matrices method, a standard deviation of Mn concentrations is 0.60 mass% or less, at the surface, a number density of Si-Al-Cr oxides having a circle equivalent radius of 0.500 $\mu$m or more is $2.0 \times 10^3$ pieces/cm$^2$ or less, and a number density of Si-Al-Cr oxides having a circle equivalent radius of 0.005 $\mu$m to 0.050 $\mu$m is $1.0 \times 10^5$ pieces/cm$^2$ or more.

Therefore, the hot-rolled steel sheet according to the present embodiment can obtain high strength and limit fracture sheet thickness reduction ratio, excellent hole expansibility, shearing property, and corrosion resistance.

In the present embodiment, the microstructural ratios, the Entropy value, the Inverse difference normalized value, the Cluster Shade value and the standard deviation of the Mn concentrations in the microstructure at the position of 1/4 from the surface in the sheet thickness direction of the hot-rolled steel sheet are specified. The reason therefor is that the microstructure at this position indicates a typical microstructure of the steel sheet.

When the hot-rolled steel sheet has the plating layer, the "surface" referred to herein refers to the interface of the plating layer and the steel sheet.

Area Ratio of Residual Austenite: Less than 3.0%

Residual austenite is a microstructure that is present as a face-centered cubic lattice even at room temperature. Residual austenite has an action of enhancing the hole expansibility of the hot-rolled steel sheet by transformation-induced plasticity (TRIP). On the other hand, residual austenite transforms into high-carbon martensite during shearing working, inhibits stable crack generations, and becomes the cause of decrease of the linearity of the boundary between the fractured surface and the sheared surface at the end surface after shearing working. When the area ratio of the residual austenite is 3.0% or more, the action is actualized, and the linearity of the boundary between the fractured surface and the sheared surface at the end surface after shearing working decreases. In addition, the desired strength cannot be obtained in the hot-rolled steel sheet. Therefore, the area ratio of the residual austenite is set to less than 3.0%. The area ratio of the residual austenite is preferably less than 1.5% and more preferably less than 1.0%.

Since residual austenite is preferably as little as possible, the area ratio of the residual austenite may be 0%.

As the measurement method of the area ratio of the residual austenite, there are methods by X-ray diffraction, EBSP (electron back scattering diffraction pattern) analysis, and magnetic measurement and the like. In the present embodiment, the area ratio of the residual austenite is measured by X-ray diffraction.

In the measurement of the area ratio of the residual austenite by X-ray diffraction in the present embodiment, first, in a cross section at a position of 1/4 from the surface in the sheet thickness direction of the hot-rolled steel sheet, a sample is collected so that the microstructure at a region of 1 mm or more in an arbitrary position of a longitudinal direction and 1 mm or more centered in a position of 1/4 from an end surface of a steel width direction can be observed. For the sample, the integrated intensities of a total of 6 peaks of $\alpha(110)$, $\alpha(200)$, $\alpha(211)$, $\gamma(111)$, $y(200)$, and $\gamma(220)$ are obtained using Co-K$\alpha$ rays. Next, the volume ratio of the residual austenite is calculated using the intensity averaging method from the integrated intensities. The obtained volume ratio is regarded as an area ratio of the residual austenite.

Area Ratio of Ferrite: less than 5.0%

Ferrite is generally a soft microstructure. When ferrite is contained more than a predetermined amount, the desired strength may not be obtained, and the area of the sheared surface at the end surface after shearing working may increase. When the area of the sheared surface at the end surface after shearing working increases, the linearity of the boundary between the fractured surface and the sheared surface at the end surface after shearing working decreases, which is not preferable. When the area ratio of ferrite is 5.0% or more, the above action becomes visible. Therefore, the area ratio of the ferrite is set to less than 5.0%. The area ratio of ferrite is preferably 3.0% or less, more preferably 2.0% or less, and still more preferably less than 1.0%.

Since ferrite is preferably as less as possible, and may be 0%.

Total Area Ratio of Martensite and Tempered Martensite: more than 92.0% and 100.0% or less

When the total area ratio of martensite and tempered martensite is 92.0% or less, the desired strength cannot be obtained in the hot-rolled steel sheet. Therefore, the total area ratio of martensite and tempered martensite is set to more than 92.0%. The total area ratio of martensite and tempered martensite is preferably 93.0% or more, 95.0% or more, 97.0% or more or 99.0% or more. Since the total area ratio of martensite and tempered martensite is preferably as more as possible, and may be set to 100.0%.

The hot-rolled steel sheet according to the present embodiment may contain bainite and pearlite of 0% or more and less than 8.0% in total as the remainder in microstructure. The upper limit of the area ratio of the remainder in microstructure may be set to 6.0%, 5.0%, 4.0%, 3.0% or 1.5%.

Measurement of the area ratios of each structure is performed by the following method.

After mirror finishing a sheet thickness section parallel to a rolling direction, the sample is polished at room temperature with colloidal silica having grain size of 0.25 $\mu$m not containing an alkaline solution for 8 minutes, thereby removing strain introduced into a surface layer of the sample. For a cross section of the sample, crystal orientation information is obtained at a region of 50 mm or more at an arbitrary position in the longitudinal direction and 50 mm or more centered in a position of 1/4 from the end surface in the sheet thickness direction. The crystal orientation information is obtained by a measurement using electron backscatter diffraction at a measurement interval of 0.1 $\mu$m. For the measurement, an EBSD analyzer configured of a thermal field emission scanning electron microscope (JSM-7001F manufactured by JEOL) and an EBSD detector (DVC5 type detector manufactured by TSL) is used. At this time, the degree of vacuum inside the EBSD analyzer is set to $9.6 \times 10^{-5}$ Pa or less, the acceleration voltage is set to 15 kV, the irradiation current level is set to 13, and the electron beam irradiation level is set to 62. The observation area is set to 40000 $\mu$m$^2$.

Next, a backscattered electron images are photographed at the same visual fields. In the backscattered electron images, grains where ferrite and cementite are precipitated in layer shape are specified, and the area ratio of the grains is calculated, thereby obtaining the area ratio of pearlite.

After that, among grains except the grains determined as pearlite, for grains determined as having body-centered cubic structure, regions where the grain average misorientation value is 1.0° or less are determined as ferrite using the obtained crystal orientation information and a "Grain Average Misorientation" function installed in software "OIM Analysis (registered trademark)" included in the EBSD analyzer. At this time, the Grain Tolerance Angle is set to 15°, the area ratio of the region determined as ferrite is obtained, thereby obtaining the area ratio of ferrite.

Next, a measurement method of the area ratios of each of martensite and tempered martensite will be described below.

First, in order to observe the same region as the above-mentioned EBSD measurement region with a SEM, Vickers indentations are stamped in the vicinity of an observation position. After that, the structure of an observed surface is left, contamination on the surface layer is removed by polishing, and Nital etching is performed. Next, the same visual field as the EBSD observed section is observed with the SEM at a magnification of 3000 times.

In the EBSD measurement, among regions determined as structures other than ferrite, a region in which a substructure is present within grain and cementite is precipitated with a plurality of variants is determined as tempered martensite. A region in which a brightness is high and the substructure is not exposed by etching is determined as "martensite and residual austenite". The area ratio of each is calculated, thereby obtaining the area ratio of the tempered martensite and the area ratio of "martensite and residual austenite". The area ratio of martensite is obtained by subtracting the area ratio of the residual austenite obtained by the above-mentioned X-ray diffraction from the obtained area ratio of "martensite and residual austenite". The total of the area ratio of the martensite and the area ratio of the tempered martensite is calculated, thereby obtaining the total of the area ratio of the martensite and the tempered martensite.

With regard to a removal of contamination at the surface layer of the observed surface, a method such as buffing using alumina particles having a particle size of 0.1 $\mu$m or less, or Ar ion sputtering may be used.

In the present embodiment, since the area ratios of each structure are measured by X-ray diffraction, EBSD analysis, and SEM observation, the total of the area ratios of each structure obtained by measurement may not be 100.0%. When the total of the area ratios of each structure obtained by the above-mentioned method is not 100.0%, the area ratios of each structure are converted so that the total of the area ratios of each structure becomes 100.0%. For example, when the total of the area ratios of each structure is 103.0%, the area ratios of each structure are multiplied by "100.0/103.0" to obtain the area ratios of each structure.

Entropy Value: 11.0 or More
Inverse Difference Normalized Value: Less than 1.020

In order to increase the linearity of the boundary between the fractured surface and the sheared surface at the end surface after shearing working, it is important to decrease the periodicity of the microstructure and decrease the uniformity of the microstructure. In the present embodiment, the linearity of the boundary between the fractured surface and the sheared surface at the end surface after shearing working is increased by controlling the Entropy value (E value) that indicates the periodicity of the microstructure and the Inverse difference normalized value (I value) that indicates the uniformity of the microstructure.

The E value represents the periodicity of the microstructure. In a case where the brightness is periodically arranged due to an influence of the formation of a band-like structure or the like, that is, the periodicity of the microstructure is high, the E value decreases. In the present embodiment, since there is a need to make the microstructure poorly periodic, it is necessary to increase the E value. When the E value is less than 11.0, the linearity of the boundary between the fractured surface and the sheared surface at the end surface after shearing working is likely to decrease. When the microstructure has high periodicity, i.e., a low E value, a crack initiates from a periodically arranged structure as a starting point and travels through multiple band-shaped structures present in the vicinity of the starting point, and the fractured surface is formed. It is presumed that this is likely to decrease the linearity of the boundary between the fractured surface and the sheared surface at the end surface after shearing working. Therefore, the E value is set to 11.0 or more. The E value is preferably 11.1 or more and more preferably 11.2 or more. The E value is preferably as high as possible, and the upper limit is not particularly specified and may be set to 13.5 or less, 13.0 or less, 12.5 or less or 12.0 or less.

The I value represents the uniformity of the microstructure and increases as the area of a region having certain brightness increases. A high I value means that the uniformity of the microstructure is high. In the present embodiment, it is necessary to have the microstructure mainly has martensite with low uniformity of brightness in the hot-rolled steel sheet having the microstructure with the total area ratio of martensite and tempered martensite of more than 92.0%. Therefore, the I value needs to be decreased in the present embodiment. When the microstructure has high uniformity, i.e., a high I value, cracks are likely to occur from a tip of the shearing tool due to the effects of precipitates and element concentration differences within grains, and hardness differences caused by the soft ferrite phase. As a result, the linearity of the boundary between the fractured surface and the sheared surface at the end surface after shearing working is likely to decrease. That is, when the I value is 1.020 or more, it is presumed that the linearity of the boundary between the fractured surface and the sheared surface at the end surface after shearing working cannot be increased. Therefore, the I value is set to less than 1.020. The I value is preferably 1.015 or less, and more preferably 1.010 or less. The lower limit is not particularly specified and may be set to 0.900 or more, 0.950 or more or 1.000 or more.

Cluster Shade Value: $-8.0 \times 10^5$ to $8.0 \times 10^5$

Cluster Shade value (CS value) indicates skewness of the microstructure. The CS value becomes a positive value when there are many points with a brightness higher than the average brightness in images obtained by photographing the microstructure, and become a negative value when there are many points with a brightness lower than the average brightness.

In a secondary electron image of an electron microscope, the brightness becomes high where the surface unevenness of the observed object is large, and the brightness becomes low where the unevenness is small. The unevenness of the surface of the observed object is greatly affected by the grain size and the strength distribution in the microstructure. The CS value in the present embodiment becomes high when the variation in the strength of the microstructure is large or the structure unit is small, and becomes low when the variation in the strength is small or the structure unit is large.

In the present embodiment, it is important to keep the CS value in a desired range close to 0. When the CS value is less than $-8.0 \times 10^5$, the limit fracture sheet thickness reduction ratio of the hot-rolled steel sheet decreases. This is presumably because large grains exist in the microstructure and these grains are preferentially fractured during extreme deformation. Therefore, the CS value is set to $-8.0 \times 10^5$ or more. The CS value is preferably $-7.5 \times 10^5$ or more, and more preferably $-7.0 \times 10^5$ or more.

On the other hand, when the CS value is more than $8.0 \times 10^5$, the limit fracture sheet thickness reduction ratio of the hot-rolled steel sheet decreases. This is presumably because there is a large variation in microscopic strength in the microstructure, strain during extreme deformation is concentrated locally, and fracture is more likely to occur. Therefore, the CS value is set to $8.0 \times 10^5$ or less. The CS value is preferably $7.5 \times 10^5$ or less, and more preferably $7.0 \times 10^5$ or less.

The E value, the I value and the CS value can be obtained by the following method.

In the present embodiment, the photographing region of SEM images photographed for calculating the E value, the I value and the CS value are set to, in a position of 1/4 from the end surface in the sheet width direction, 160 μm × 160 μm centered in a position of 1/4 from the surface in the sheet thickness direction at the cross section parallel to the rolling direction, and the number of the observation fields is set to 5. The SEM image is photographed using an SU-6600 Schottky electron gun manufactured by Hitachi High-Technologies Corporation with a tungsten emitter and an acceleration voltage of 1.5 kV. Based on the above settings, the SEM image is output at a magnification of 1000 times and a gray scale of 256 gradations.

Next, on an image obtained by cutting out the obtained SEM image into a 880 × 880-pixel region (an actual size of the observation region is 160 μm × 160 μm), a smoothing treatment described in Non-Patent Document 3, in which the contrast-enhanced limit magnification is set to 2.0 and the tile grid size is 8 × 8 is performed. The smoothed SEM image is rotated counterclockwise from 0 degrees to 179 degrees in increments of 1 degree, excluding 90 degrees, and an image is created at each angle, thereby obtaining a total of 179 images. Next, from each of these 179 images, the frequency values of brightness between adjacent pixels are sampled in a matrix form using the GLCM method described in Non-Patent Document 1.

179 matrices of the frequency values sampled by the above method are expressed as $p_k$ (k=0···89, 91,···179) where k is a rotation angle from the original image. $p_k$'s generated for individual images are summed for all k's (k=0···89, 91,···179), and then 256 × 256 matrices P standardized so that the total of individual components becomes 1 are calculated. Furthermore, the E value, the I value and the CS value are each calculated using the following formulas (1) to (5) described in Non-Patent Document 2. Note that the average value obtained by measuring the entire visual fields is calculated.

P(i,j) in the following formulas (1) to (5) is the gray level co-occurrence matrix, the value at the ith row and jth column of the matrix P is expressed as P(i,j). As described above, since the calculation is performed using the 256 × 256 matrices P, when this point is emphasized, the following formulas (1) to (5) can be modified to the following formulas (1') to (5'). Here, L in the following formula (2) is possible Quantization levels of grayscale of the SEM images, since the SEM image is output in grayscales of 256 gradations as described above in the present embodiment, L is 256. The dot symbol "." in the following formula (1) represents a product. i and j in the following formulas (2) and (3) are natural numbers from 1 to the L, $\mu_x$ and $\mu_y$ in the following formula (3) are indicated by the following formulas (4) and (5)

In the following formulas (1') to (5'), the value at the ith row and the jth column of the matrix P is expressed as $P_{ij}$.

[Formula 6]

$$Entropy = -\sum_i \sum_j P(i,j).\log\left(P(i,j)\right) \quad \cdot\cdot\cdot \ (1)$$

[Formula 7]

$$Inverse\ difference\ normalized = \sum_i \sum_j \frac{P(i,j)}{1+\dfrac{|i-j|}{L}} \quad \cdot\cdot\cdot (2)$$

[Formula 8]

$$Cluster\ Shade = \sum_i \sum_j \left(i+j-\mu_x-\mu_y\right)^3 P(i,j) \quad \cdot\cdot\cdot (3)$$

[Formula 9]

$$\mu_x = \sum_i \sum_j i\left(P(i,j)\right) \quad \cdot\cdot\cdot (4)$$

[Formula 10]

$$\mu_y = \sum_i \sum_j j\left(P(i,j)\right) \quad \cdot\cdot\cdot (5)$$

**[Formula** 11]

$$Entropy = -\sum_{i=1,j=1}^{i=256,j=256} P_{ij}\log P_{ij} \quad \cdot\cdot\cdot (1')$$

[Formula 12]

$$Inverse\ difference\ normalized = \sum_{i=1,j=1}^{i=256,j=256} P_{ij}\Big/\left(1+|i-j|/256\right)$$

$$\cdot\cdot\cdot (2')$$

**[Formula** 13]

$$Cluster\ Shade = \sum_{i=1,j=1}^{i=256,j=256} \left(i+j-\mu_x-\mu_y\right)^3 P_{ij} \quad \cdots (3')$$

[Formula 14]

$$\mu_x = \sum_{i=1,j=1}^{i=256,j=256} i\left(P_{ij}\right) \quad \cdots (4')$$

[Formula 15]

$$\mu_y = \sum_{i=1,j=1}^{i=256,j=256} j\left(P_{ij}\right) \quad \cdots (5')$$

Standard Deviation of Mn Concentrations: 0.60 mass% or Less

The standard deviation of the Mn concentrations of a depth position of 1/4 of the sheet thickness from the surface (a region from a depth of 1/8 of the sheet thickness from the surface to a depth of 3/8 of the sheet thickness from the surface) of the hot-rolled steel sheet according to the present embodiment is 0.60 mass% or less. This makes it possible to uniformly disperse the hard phase and makes it possible to prevent the decrease of the linearity of the boundary between the fractured surface and the sheared surface at the end surface after shearing working. The standard deviation of the Mn concentrations is preferably 0.55 mass% or less or 0.50 mass% or less, and more preferably 0.47 mass% or less. The value of the lower limit of the standard deviation of the Mn concentrations is desirably as small as possible from the viewpoint of suppressing excessively large burrs, but the substantial lower limit is 0.10 mass% due to restrictions in the manufacturing process. If necessary, the lower limit may be set to 0.20 mass% or 0.28 mass%.
The standard deviation of the Mn concentrations is obtained by the following method.
After mirror polishing the sheet thickness section parallel to the rolling direction of the hot-rolled steel sheet, for the depth position of 1/4 of the sheet thickness from the surface (the region from the depth of 1/8 of the sheet thickness from the surface to the depth of 3/8 of the sheet thickness from the surface) and the center position in the sheet width direction, the standard deviation of the Mn concentrations is measured using an electron probe micro analyzer (EPMA). As the measurement conditions, the acceleration voltage is set to 15 kV and the magnification is set to 5000 times, and a distribution image in a range of 20 $\mu$m in the rolling direction of the sample and 20 $\mu$m in the sheet thickness direction of the sample is measured. More specifically, the Mn concentrations of 40000 or more points are measured with the measurement interval of to 0.1 $\mu$m. Next, the standard deviation is calculated based on the Mn concentrations obtained from all of the measurement points, thereby obtaining the standard deviation of the Mn concentrations.

Number Density of Si-Al-Cr Oxides Having Circle Equivalent Radius of 0.500 $\mu$m or More at Surface: $2.0\times10^3$ pieces/cm$^2$ or less
Number Density of Si-Al-Cr Oxides Having Circle Equivalent Radius of 0.005 $\mu$m to 0.050 $\mu$m at Surface: $1.0\times10^5$ pieces/cm$^2$ or more

The present inventors have found that among Si-Al-Cr oxides formed at the surface, by controlling the number density of Si-Al-Cr oxides having the circle equivalent radius of 0.500 $\mu$m or more and Si-Al-Cr oxides having the circle equivalent radius of 0.005 $\mu$m to 0.050 $\mu$m in the desired range, the corrosion resistance of the hot-rolled steel sheet can be improved.
When the number density of Si-Al-Cr oxides having the circle equivalent radius of 0.500 $\mu$m or more at the surface is more than $2.0\times10^3$ pieces/cm$^2$, the electrochemical reaction between the solution and the steel sheet is locally hindered during chemical conversion treatment, the zinc phosphate film does not adhere to the steel sheet, and the corrosion resistance of the hot-rolled steel sheet deteriorates. Therefore, the number density of Si-Al-Cr oxides having the circle equivalent radius of 0.500 $\mu$m or more at the surface is set to $2.0\times10^3$ pieces/cm$^2$ or less. The number density of Si-Al-Cr oxides having the circle equivalent radius of 0.500 $\mu$m or more at the surface is preferably $1.8\times10^3$ pieces/cm$^2$ or less, and more preferably $1.5\times10^3$ pieces/cm$^2$ or less.
The number density of Si-Al-Cr oxides having the circle equivalent radius of 0.500 $\mu$m or more may be set to

$0.1 \times 10^3$ pieces/cm$^2$ or more.

When the number density of Si-Al-Cr oxides having the circle equivalent radius of 0.005 μm to 0.050 μm at the surface is less than $1.0 \times 10^5$ pieces/cm$^2$, the corrosion resistance of the hot-rolled steel sheet deteriorates. Although the mechanism is unclear, it is considered that in minute Si-Al-Cr oxides, an increase of a surface area acts as an anchor effect rather than the effect of preventing the electrochemical reaction, making it easier for the zinc phosphate film to adhere. Therefore, the number density of Si-Al-Cr oxides having the circle equivalent radius of 0.005 μm to 0.050 μm at the surface is set to $1.0 \times 10^5$ pieces/cm$^2$ or more. The number density of Si-Al-Cr oxides having the circle equivalent radius of 0.005 μm to 0.050 μm at the surface is preferably $3.0 \times 10^5$ pieces/cm$^2$ or more, and more preferably $5.0 \times 10^5$ pieces/cm$^2$ or more.

The number density of Si-Al-Cr oxides having the circle equivalent radius of 0.005 μm to 0.050 μm at the surface may be $100.0 \times 10^5$ pieces/cm$^2$ or less, $50.0 \times 10^5$ pieces/cm$^2$ or less, $30.0 \times 10^5$ pieces/cm$^2$ or less or $15.0 \times 10^5$ pieces/cm$^2$ or less.

Note that it is not necessary to limit the number density of Si-Al-Cr oxides having a circle equivalent radius of less than 0.005 μm, and the number density of Si-Al-Cr oxides having a circle equivalent radius of more than 0.050 μm and less than 0.500 μm in the present embodiment. This is because, in the hot-rolled steel sheet which has the chemical composition according to the present embodiment and is manufactured by the manufacturing method described below, Si-Al-Cr oxides having the circle equivalent radius of less than 0.005 μm, and Si-Al-Cr oxides having the circle equivalent radius of more than 0.050 μm and less than 0.500 μm are not formed with an amount which acts adverse effect to the properties of the hot-rolled steel sheet according to the present embodiment.

The number density of Si-Al-Cr oxides at the surface is measured by the following method.

A sample is cut out from the hot-rolled steel sheet so that the surface (sheet surface) in the sheet thickness direction is the observation plane. The observation plane is degreased at 60°C for 60 seconds using FC-E6403 manufactured by Nihon Parkerizing Co., Ltd., and then immersed in acetone and subjected to ultrasonic cleaning for 90 seconds. Then, 10 or more visual fields are observed at a magnification of 3000 times. The composition of precipitates can be measured by EDS (energy dispersive X-ray spectrometer). Among precipitates containing Si, Al, Cr, and O, a precipitate having a circle equivalent radius of 0.500 μm or more and a precipitate having a circle equivalent radius of 0.005 μm to 0.050 μm are selected and the numbers thereof are counted, and by dividing them by the measured area, the number density of Si-Al-Cr oxides having the circle equivalent radius of 0.500 μm or more and the number density of Si-Al-Cr oxides having the circle equivalent radius of 0.005 μm to 0.050 μm are obtained.

Note that Si, Cr and O are each detected to be 10 atom% or more and Al is detected to be 5 atom% or more when the precipitate is analyzed by EDS, the precipitate is regarded as a Si-Al-Cr oxide. When a precipitate has a similar grain shape and contrast due to electron beam intensity to a precipitate regarded as Si-Al-Cr oxide by EDS analysis, the EDS analysis can be omitted and the precipitate can be regarded as Si-Al-Cr oxide.

Note that when the hot-rolled steel sheet has scale on the surface, the sample is subjected to the above surface treatment after a pickling treatment under the following condition.

The pickling treatment may be performed in a standard method, for example, by immersing the sample in hydrochloric acid having a hydrochloric acid concentration of 3 vol% to 10 vol% at a temperature of 85°C to 98°C for 20 to 300 seconds. The pickling may be performed once, or may be performed several times as necessary. The above pickling time (20 to 300 seconds) means the time of the pickling when pickling is performed only once, and means the total time of the pickling when pickling is performed several times. By setting the pickling temperature to 85°C or higher, it is preferable since the oxides in the surface layer can be sufficiently removed. The upper limit of the pickling temperature is not particularly limited, but is practically about 98°C. When the pickling time is longer than 300 seconds, the surface roughness becomes excessively rough and the surface properties deteriorate, and furthermore, an unevenness remaining after cold rolling may cause a notch-like effect, which may deteriorate the bendability of the hot-rolled steel sheet. The upper limit of the pickling time is preferably 200 seconds.

When the hot-rolled steel sheet has a surface treatment film such as a plating layer or a coating, the above-mentioned pickling treatment is performed for the surface of the base steel obtained after removing the surface treatment film, and then the above-mentioned surface treatment is performed. The method for removing the surface treatment film can be appropriately selected according to the kind of the surface treatment film as long as it does not affect the surface roughness of the base steel. For example, when the surface treatment film is a galvanized layer such as electrogalvanizing, electro Zn-Ni alloy plating, hot-dip galvanizing, hot-dip galvannealing, hot-dip Zn-Al alloy plating, hot-dip Zn-Al-Mg alloy plating, or hot-dip Zn-Al-Mg-Si alloy plating, the galvanized layer may be dissolved using dilute hydrochloric acid with an inhibitor added. This allows only the galvanized layer to be peeled off from the steel sheet. The inhibitor is an additive used for prevent excessive dissolution of the base steel and suppress changes in roughness. For example, hydrochloric acid diluted to 5 vol% with a corrosion inhibitor for hydrochloric acid pickling "Ibit No. 700BK" manufactured by Asahi Chemical Industry Co., Ltd. added to a concentration of 0.6 g/L can be used. In addition, when the surface treatment film is an aluminum plating layer such as hot-dip aluminum plating, in accordance with the description of JIS G 3314:2019, the aluminum plating is dissolved by sequentially immersing in an aqueous sodium hydroxide solution and a dilute hydrochloric acid solution to which hexamethylenetetramine is added until foaming caused by dissolution of the plating subsides. In addition, when the surface treatment film is an electrodeposition coating, the electrodeposition coating is peeled off using a stripper (Neo River SP-751, manufactured by Sansai Kako Co., Ltd.).

Tensile Strength

The tensile strength of the hot-rolled steel sheet is evaluated according to JIS Z 2241: 2011. A test piece is set to a No. 5 test piece of JIS Z 2241: 2011. The sampling position of the test piece may be set to a position of 1/4 from the end surface in the sheet width direction, and the sheet width direction may be set to the longitudinal direction of the test piece.

In the hot-rolled steel sheet according to the present embodiment, the tensile strength is preferably 980 MPa or more. The tensile strength is more preferably 1000 MPa or more. When the tensile strength is set to 980 MPa or more, applicable components are not limited and contribution for weight reduction of vehicle body can be great. The upper limit of the tensile strength does not need to be particularly limited and may be set to 1780 MPa from the viewpoint of suppressing the wearing of a die.

Hole Expansibility

The hot-rolled steel sheet according to the present embodiment preferably has a hole expansion ratio of 55% or more. When the hole expansion ratio is 55% or more, the applicable components are not limited, and the hot-rolled steel sheet that greatly contributes for weight reduction of the vehicle body can be obtained. The upper limit of the hole expansion ratio does not need to be particularly limited, but may be 85% or less or 80% or less.

The hole expansion ratio ($\lambda$) is measured according to JIS Z 2256: 2010 using No. 5 test piece of JIS Z 2241: 2011. The collection position of the hole expansion test piece may be a part of 1/4 from the end part in the sheet width direction of the hot-rolled steel sheet.

Sheet Thickness

The sheet thickness of the hot-rolled steel sheet according to the present embodiment is not particularly limited and may be set to 0.5 to 8.0 mm. When the sheet thickness of the hot-rolled steel sheet is less than 0.5 mm, it may become difficult to secure the rolling finishing temperature and the rolling force may become excessive, which makes hot rolling difficult. Therefore, the sheet thickness of the hot-rolled steel sheet according to the present embodiment may be set to 0.5 mm or more. The sheet thickness is preferably 1.2 mm or more or 1.4 mm or more. On the other hand, when the sheet thickness is more than 8.0 mm, it becomes difficult to refine the microstructure, and it may be difficult to obtain the above microstructure. Therefore, the sheet thickness may be set to 8.0 mm or less. The sheet thickness is preferably 6.0 mm or less.

Plating Layer

The hot-rolled steel sheet according to the present embodiment having the above-described chemical composition and microstructure may be provided with a plating layer on the surface for the purpose of improving corrosion resistance and the like and thereby made into a surface-treated steel sheet. The plating layer may be an electro plating layer or a hot-dip plating layer. Examples of the electro plating layer include electrogalvanizing, electro Zn-Ni alloy plating, and the like. Examples of the hot-dip plating layer include hot-dip galvanizing, hot-dip galvannealing, hot-dip aluminum plating, hot-dip Zn-Al alloy plating, hot-dip Zn-Al-Mg alloy plating, hot-dip Zn-Al-Mg-Si alloy plating, and the like. The plating adhesion amount is not particularly limited and may be the same as before. In addition, it is also possible to further enhance the corrosion resistance by performing an appropriate chemical conversion treatment (for example, the application and drying of a silicate-based chromium-free chemical treatment liquid) after plating.

Manufacturing Conditions

A suitable method for manufacturing the hot-rolled steel sheet according to the present embodiment having the above-described chemical composition and microstructure is as follows.

In the suitable method for manufacturing the hot-rolled steel sheet according to the present embodiment, the following steps (1) to (11) are sequentially performed. The temperature of the slab and the temperature of the steel sheet in the present embodiment refer to the surface temperature of the slab and the surface temperature of the steel sheet. In addition, stress refers to tension that is loaded in the rolling direction of the steel sheet.

(1) The slab is retained in a temperature range of 700°C to 850°C for 900 seconds or longer, then, further heated, and retained in a temperature range of 1100°C or higher for 6000 seconds or longer.

(2) Descaling is performed one or more times in a temperature range of 1200°C or higher before rough rolling, descaling is performed two or more times in a temperature range of 1150°C or higher during rough rolling, and a maximum value of a total rolling reduction between descaling in the temperature range of 1150°C or higher is set to 40% or more.

(3) Among rough rolling, a maximum temperature from a final stand of rolling where the rolling reduction exceeds 20% to descaling after completion of rough rolling is set to 1130°C or lower.

(4) Hot rolling is performed in a temperature range of 850°C to 1100°C so that a total rolling reduction is 90% or more.

(5) Stress of 170 kPa or more is loaded to the steel sheet from completion of rolling at one stand before a final stand of hot rolling to start of rolling at the final stand.

(6) The rolling reduction at the final stand of hot rolling is set to 8% or more, and hot rolling is finished so that a finishing temperature Tf is 900°C or higher and lower than 1010°C.

(7) Stress of less than 200 kPa is loaded to the steel sheet from completion of rolling at the final stand of hot rolling to the steel sheet is cooled to 800°C.

(8) Accelerated cooling is performed so that an average cooling rate from completion of hot rolling to 600°C is 50 °C/s or faster.

(9) Cooling is performed so that an average cooling rate in a temperature range of 450°C to 600°C is 30 °C/s or faster and slower than 50 °C/s.

(10) Accelerated cooling is performed so that an average cooling rate in a temperature range of coiling temperature to 450°C is 50 °C/s or faster.

(11) Coiling is performed in a temperature range of 350°C or lower.

By adopting the above manufacturing method, a hot-rolled steel sheet having high strength and limit fracture sheet thickness reduction ratio, excellent hole expansibility, shearing property, and corrosion resistance can be stably manufactured.

(1) Slab, Slab Temperature and Retention Time at Hot Rolling

As the slab that is subjected to hot rolling, a slab obtained by continuous casting, a slab obtained by casting and blooming, or the like can be used. In addition, if necessary, it is possible to use the above slabs after hot working or cold working.

The slab that is subjected to hot rolling is preferably retained in a temperature range of 700°C to 850°C for 900 seconds or longer during slab heating, then, further heated, and retained in a temperature range of 1100°C or higher for 6000 seconds or longer. Note that during retention in the temperature range of 700°C to 850°C, the steel sheet temperature may be fluctuated or be maintained constant in this temperature range. In addition, during retention at 1100°C or higher, the steel sheet temperature may be fluctuated or be maintained constant in the temperature range of 1100°C or higher.

In austenitic transformation in the temperature range of 700°C to 850°C, Mn is distributed between ferrite and austenite, and Mn can be diffused into the ferrite region by extending the transformation time. Accordingly, the Mn microsegregation unevenly distributed in the slab can be eliminated, and the standard deviation of the Mn concentrations can be significantly reduced. In addition, by retention the slab in the temperature range of 1100°C or higher for 6000 seconds or longer, the Mn concentrations can be significantly reduced.

In the hot rolling, it is preferable to use a reverse mill or a tandem mill for multi-pass rolling. Particularly, from the viewpoint of industrial productivity and the viewpoint of stress loading on the steel sheet during the rolling, at least the final two stands are more preferably hot rolling in which a tandem mill is used.

(2) Descaling Condition Before Rough Rolling, Descaling Condition and Rolling Condition During Rough Rolling

Before rough rolling, descaling is preferably performed one or more times in the temperature range of 1200°C or higher. By performing descaling one or more times in the temperature range of 1200°C or higher before rough rolling, a primary scale formed in a heating furnace can be removed and an occurrence of subsequent descaling failures can be suppressed. As a result, the number density of Si-Al-Cr oxides having the circle equivalent radius of 0.500 $\mu$m or more at the surface of the hot-rolled steel sheet can be preferably controlled. The upper limit of number of times of descaling in the temperature range of 1200°C or higher is not particularly limited, but may be set to 6 or less times.

Rolling and descaling are performed multiple times in rough rolling. During rough rolling, descaling is performed between rolling and rolling, or after multiple rolling. In the present embodiment, during rough rolling, descaling is preferably performed two or more times in the temperature range of 1150°C or higher, and the maximum value of the total rolling reduction between descaling in the temperature range of 1150°C or higher is preferably set to 40% or more. By performing descaling two or more times in the temperature range of 1150°C or higher, a scale thickness formed at the preliminary stage of rough rolling is reduced or scales are removed, thereby preferably controlling the number density of Si-Al-Cr oxides having the circle equivalent radius of 0.500 $\mu$m or more at the surface of the hot-rolled steel sheet. In addition, by setting the maximum value of the total rolling reduction between descaling in the temperature range of 1150°C or higher to 40% or more, the effect of descaling can be increased, thereby preferably controlling the number density of Si-Al-Cr oxides having the circle equivalent radius of 0.500 $\mu$m or more at the surface of the hot-rolled steel sheet.

In order to set the maximum value of the total rolling reduction between descaling in the temperature range of 1150°C or higher to 40% or more, for example, between descaling in the temperature range of 1150°C or higher, rolling at rolling reduction of 40% or more may be performed once, or multiple rolling may be performed so that the total rolling reduction is 40% or more.

The total rolling reduction between each descaling in the temperature range of 1150°C or higher can be expressed as $\{(t_0 - t_1)/t_0\} \times 100$ (%), where a sheet thickness before $n^{th}$ descaling in the temperature range of 1150°C or higher is $t_0$ and an outlet sheet thickness after $n+1^{th}$ descaling in the temperature range of 1150°C or higher is $t_1$. Between $n^{th}$ descaling and $n+1^{th}$ descaling, rolling may be performed once, or multiple rolling may be performed.

(3)Temperature Condition During Rough Rolling and After Completion of Rough Rolling

Among rough rolling, the maximum temperature from the final stand of rolling where the rolling reduction exceeds 20% to descaling after completion of rough rolling is preferably set to 1130°C or lower. After rough rolling, descaling is performed to remove scales generated in rough rolling. In addition, after rolling at the final stand of rough rolling, a temperature of the steel sheet is increased due to heat recuperation from inside of the steel sheet. In the present embodiment, among rough rolling, from the final stand of rolling where the rolling reduction exceeds 20% to descaling after completion of rough rolling, the maximum temperature of steel sheet temperature increased by heat recuperation is preferably controlled to 1130°C or lower. Among rough rolling, by setting the maximum temperature from the final stand of rolling where the rolling reduction exceeds 20% to descaling after completion of rough rolling to 1130°C or lower, the number density of Si-Al-Cr oxides having the circle equivalent radius of 0.005 $\mu$m to 0.050 $\mu$m can be preferably controlled.

Note that for a purpose of soaking of the steel sheet, even in a case where the steel sheet temperature is increased by heating between the final stand of rolling where the rolling reduction exceeds 20% among rough rolling and descaling after completion of rough rolling, the maximum temperature is preferably controlled to 1130°C or lower.

In addition, "final stand of rolling where the rolling reduction exceeds 20%" referred to herein is not necessarily a final rolling at finish rolling. For example, when the rolling reduction of the final rolling at finish rolling is 20% or less and the rolling reduction of rolling at one stand before the final stand is more than 20%, the rolling at one stand before the final stand is "final stand of rolling where the rolling reduction exceeds 20%".

(4) Total Rolling Reduction of Hot Rolling: 90% or More in Temperature Range of 850°C to 1100°C

When the hot rolling is performed so that the total rolling reduction is 90% or more in the temperature range of 850°C to 1100°C, mainly recrystallized austenite grains are refined, and accumulation of strain energy into the unrecrystallized austenite grains is promoted. In addition, the recrystallization of austenite is promoted, and the atomic diffusion of Mn is promoted, which makes it possible to reduce the standard deviation of the Mn concentrations. Therefore, it is preferable to perform the hot rolling so that the total rolling reduction is 90% or more in the temperature range of 850°C to 1100°C.

Note that the hot rolling referred to herein includes rough rolling and finish rolling.

The rolling reduction in the temperature range of 850°C to 1100°C can be expressed as $\{(t_0 - t_1)/t_0\} \times 100$ (%), where an inlet sheet thickness before rolling at the first rolling in the temperature range is $t_0$ and an outlet sheet thickness after rolling at the final stand in the temperature range is $t_1$.

(5) Stress Loaded to Steel Sheet From Completion of Rolling at One Stand before Final Stand of Hot Rolling To Start of Rolling at Final Stand: 170 kPa or More

The stress of 170 kPa or more is preferably loaded to the steel sheet from completion of rolling at the one stand before the final stand of hot rolling to start of rolling at the final stand. This make it possible to reduce the number of grains having a {110}<001> crystal orientation in the recrystallized austenite after completion of the rolling at the one stand before the final stand. Since { 110}<001> is a crystal orientation that is difficult to recrystallize, recrystallization by the rolling at the final stand can be effectively promoted by suppressing the formation of this crystal orientation. As a result, the band-like structure of the hot-rolled steel sheet is improved, the periodicity of the microstructure is reduced, and the E value increases.

Note that the rolling at the one stand before the final stand of hot rolling referred to herein means the rolling at one stand before the final stage of finish rolling. For example, when finish rolling is performed with stands of F1, F2, ..., F6, and F7, it means rolling at the 6th stand (F6).

When the stress that is loaded to the steel sheet is less than 170 kPa, a desired E value may not be obtained. The stress that is loaded to the steel sheet is preferably 190 kPa or more.

Note that the stress that is loaded to the steel sheet refers to a tension in the longitudinal direction of the steel sheet, and can be controlled by adjusting the roll rotation speed during tandem rolling, can be determined by dividing the load in the rolling direction measured in the rolling stand by the cross sectional area of the steel sheet being passed.

(6) Rolling Reduction at Final Stand of Hot Rolling: 8% or More, Finishing Temperature Tf: 900°C or Higher and Lower Than 1010°C

It is preferable that the rolling reduction at the final stand of the hot rolling is set to 8% or more and the finishing temperature Tf is set to 900°C or higher. When the rolling reduction at the final stand of the hot rolling is set to 8% or more, it is possible to promote recrystallization caused by the final stand rolling. As a result, the band-like structure of the hot-rolled steel sheet is improved, the periodicity of the microstructure is reduced, and the E value increases. When the finishing temperature Tf is set to 900°C or higher, it is possible to suppress an excessive increase in the number of ferrite nucleation sites in austenite. As a result, the formation of ferrite in the final structure (the microstructure of the hot-rolled steel sheet after manufacturing) is suppressed, and the hot-rolled steel sheet having high strength can be obtained. In addition, when Tf is set to lower than 1010°C, it is possible to suppress the coarsening of the austenite grain sizes and to obtain a desired E value by reducing the periodicity of the microstructure.

(7) Stress Loaded to Steel Sheet From Completion of Rolling at Final Stand of Hot Rolling to Steel Sheet Being Cooled to 800°C: Less than 200 kPa

It is preferable that stress of less than 200 kPa is loaded to the steel sheet from the completion of the rolling at the final stand of hot rolling to the steel sheet is cooled to 800°C. By loading the stress of less than 200 kPa to the steel sheet, the recrystallization of austenite preferentially proceeds in the rolling direction, and an increase in the periodicity of the microstructure can be suppressed. As a result, the E value can be set to a desired value. The stress that is loaded to the steel sheet is more preferably 180 kPa or less.

(8) Average Cooling Rate From Completion of Hot Rolling to 600°C: 50 °C/s or Faster

By performing the accelerated cooling so that the average cooling rate from completion of hot rolling to 600°C is 50 °C/s or faster, ferritic transformation, bainitic transformation and/or pearlitic transformation inside the steel sheet can be suppressed, and the desired strength can be obtained in the hot-rolled steel sheet. In addition, the I value can be set to the desired value. When air cooling is performed during accelerated cooling to 600°C after completion of hot rolling, the amount of ferrite may increase, which is not preferable.

The upper limit of the average cooling rate is not particularly specified, but when the cooling rate is increased, the cooling equipment becomes large and the equipment cost increases. Therefore, considering the equipment cost, the average cooling rate of accelerated cooling is preferably 300 °C/s or slower.

Note that the average cooling rate referred to herein refers to a value obtained by dividing the temperature drop width of the steel sheet from the start of accelerated cooling (when introducing the steel sheet into cooling equipment) to 600°C by the time required from the start of accelerated cooling to the temperature of the steel sheet reaches 600°C.

(9) Average Cooling Rate in Temperature Range of 450°C to 600°C: 30 °C/s or Faster and Slower Than 50 °C/s

After finishing the above accelerated cooling, cooling is preferably performed so that the average cooling rate in the temperature range of 450°C to 600°C is 30 °C/s or faster and slower than 50 °C/s. By setting the average cooling rate in the above temperature range to 30 °C/s or faster and slower than 50 °C/s, the CS value can be set to the desired value. When the average cooling rate is 50 °C/s or faster, coarse grains are likely to be generated in the microstructure, and the CS value becomes less than $-8.0 \times 10^5$. When the average cooling rate is slower than 30 °C/s, the strength of the hard structure increases, and the strength difference with the soft structure increases, thereby becoming the CS value to more than $8.0 \times 10^5$.

Note that the average cooling rate referred to herein refers to a value obtained by dividing the temperature drop width of the steel sheet from the cooling stop temperature of the accelerated cooling with the average cooling rate of 50 °C/s or faster to the cooling stop temperature of the cooling with the average cooling rate of 30 °C/s or faster and slower than 50 °C/s by the time required from the stop of the accelerated cooling with the average cooling rate is 50 °C/s or faster to stop of the cooling with the average cooling rate of 30 °C/s or faster and slower than 50 °C/s.

(10) Average Cooling Rate in Temperature Range of Coiling Temperature to 450°C: 50 °C/s or Faster

In order to suppress the area ratio of pearlite, and obtain the desired strength in the hot-rolled steel sheet, the average cooling rate in the temperature range of the coiling temperature to 450°C is preferably set to 50 °C/s or faster. This makes it possible to harden a mother-phase structure.

Note that the average cooling rate referred to herein refers to a value obtained by dividing the temperature drop width of the steel sheet from the cooling stop temperature of the cooling with the average cooling rate of 30 °C/s or faster and slower than 50 °C/s to the coiling temperature by the time required from the stop of the cooling with the average cooling rate of 30 °C/s or faster and slower than 50 °C/s to coiling.

(11) Coiling Temperature: 350°C or Lower

The coiling temperature is preferably set to 350°C or lower. By setting the coiling temperature to 350°C or lower, a driving force for transformation from austenite to bcc can be increased, and a deformation strength of austenite can be increased. Therefore, the hard phase is uniformly distributed when transforming from austenite to martensite, and the variation can be improved. As a result, the I value can be decreased, and the linearity of the boundary between the fractured surface and the sheared surface at the end surface after shearing working can be increased. Therefore, it is preferable that the coiling temperature is 350°C or lower.

Examples

Next, the effects of one aspect of the present invention will be described more specifically by way of examples, but the conditions in the examples are condition examples adopted for confirming the feasibility and effects of the present invention. The present invention is not limited to these condition examples. The present invention can adopt various conditions as long as the object of the present invention is achieved without departing from the gist of the present invention.

Steels having a chemical composition shown in Tables 1 and 2 were melted and continuously cast to manufacture slabs having a thickness of 240 to 300 mm. The obtained slabs were used to obtain hot-rolled steel sheets shown in Table 5A to Table 6 under the manufacturing conditions shown in Table 3A to Table 4B.

Note that the actual coiling temperatures of the examples with a value of 50°C are 50°C or lower since the measurement lower limit of the coiling temperature shown in Table 4A and Table 4B is 50°C. In addition, manufacturing No. 15 was cooled to 721°C after completion of hot rolling, and then air cooling was performed for 6.0 seconds. The average cooling rate during air cooling was slower than 5.0 °C/s.

The area ratio of the microstructure, the E value, the I value, the CS value, the standard deviation of the Mn concentrations, the number density of Si-Al-Cr oxides having the circle equivalent radius of 0.500 $\mu$m or more and the number density of Si-Al-Cr oxides having the circle equivalent radius of 0.005 $\mu$m to 0.050 $\mu$m at the surface, the tensile strength (TS), and the hole expansion ratio ($\lambda$) of each the obtained hot-rolled steel sheet were obtained by the above methods. The obtained results are shown in Table5A to Table 6.

Evaluation Method of Properties of Hot-Rolled Steel Sheets

Tensile Strength

In a case where the tensile strength (TS) was 980 MPa or more, the hot-rolled steel sheet was determined as having high strength and being successful. On the other hand, in a case where the tensile strength (TS) was less than 980 MPa, the hot-rolled steel sheet was determined as not having high strength and not being successful.

Hole Expansion Ratio

In a case where the hole expansion ratio ($\lambda$) was 55% or more, the hot-rolled steel sheet was determined as having excellent hole expansibility and being successful. On the other hand, in a case where the hole expansion ratio ($\lambda$) was less than 55%, the hot-rolled steel sheet was determined as having poor hole expansibility and not being successful.

Limit Fracture Sheet Thickness Reduction Ratio

The limit fracture sheet thickness reduction ratio of the hot-rolled steel sheet was evaluated by tensile test.

The tensile test was conducted in the similar manner as when the tensile properties were evaluated. When the sheet thickness before the tensile test was set to t1, and the minimum sheet thickness at the center part of the width direction of the tensile test piece after fracture was set t2, the limit fracture sheet thickness reduction ratio was obtained by calculating the value of (t1-t2)×100/t1. The tensile test was conducted 5 times, and the limit fracture sheet thickness reduction ratio was obtained by calculating the average value of 3 times excluding the maximum and the minimum values of the limit fracture sheet thickness reduction ratio.

In a case where the limit fracture sheet thickness reduction ratio was 75.0% or more, the hot-rolled steel sheet was determined as having high limit fracture sheet thickness reduction ratio, and being successful. On the other hand, in a case where the limit fracture sheet thickness reduction ratio was less than 75.0%, the hot-rolled steel sheet was determined as not having high limit fracture sheet thickness reduction ratio, and not being successful.

Shearing property (Evaluation of Linearity of Boundary Between Fractured Surface and Sheared Surface)

Among the shearing property of the hot-rolled steel sheet, the linearity of the boundary between the fractured surface and the sheared surface was evaluated by performing a punching test and determined a degree of the linearity at the boundary between the fractured surface and the sheared surface.

5 punched holes were produced with a hole diameter of 10 mm, a clearance of 15%, and a punching speed of 3 m/s at a center position in the sheet width direction of the hot-rolled steel sheet. Next, for the 5 punched holes, appearances of 10 end surfaces parallel to the rolling direction were photographed using an optical microscope. In the obtained observation photographs, the end surface as shown in FIG. 1 (a) can be observed. As shown in FIGS. 1 (a) and (b), shear droop, sheared surface, fractured surface, and burr were observed at the end surface after shearing working. Note that FIG. 1 (a) is a diagram of the end surface parallel to the rolling direction of the punched hole, and FIG. 1 (b) is a diagram of a side surface of the punched hole. The shear droop is an R-like smooth surface region, the sheared surface is a punched end surface separated by shear deformation, the fractured surface is a punched end surface separated by a crack initiated from the vicinity of the cutting edge after shearing deformation, and a burr is a surface having projections protruding from a lower surface of the hot-rolled steel sheet.

In observed photographs of 10 end surfaces obtained from 5 end surfaces, degrees of linearity at the boundary between the fractured surface and the sheared surface were measured by the method described below, and a maximum value of the obtained degrees of linearity was calculated.

The degree of the linearity at the boundary between the fractured surface and the sheared surface was obtained by the following method.

As shown in FIG. 1 (b), boundary points between a sheared surface and a fractured surface (the point A and the point B in FIG. 1(b)) were determined for an end surface. A length of the distance x between the point A and the point B was measured. Next, a length y of the curve along the boundary of fractured surface - the sheared surface was measured. The value obtained by dividing the obtained y by x was taken as the degree of the linearity at the boundary between the fractured surface and the sheared surface.

In a case where the maximum value of the degrees of the linearity obtained in the punching test was less than 1.045, the hot-rolled steel sheet was determined as having excellent shearing property, and being successful.

On the other hand, in a case where the obtained maximum value of the degrees of the linearity was 1.045 or more, the hot-rolled steel sheet was determined as not having excellent shearing property, and not being successful.

Corrosion resistance

A sample of 70mm × 40mm was collected from the hot-rolled steel sheet after pickling, and after zinc phosphate treatment (SD5350 system, manufactured by Nippon Paint Industrial Coatings Co., Ltd.), 3 points (center and both ends) along the length of the sample were observed at a magnification of 1000 times using a scanning electron microscope (SEM). The pickling condition was the same as those for the pickling treatment described above.

In a case where the coverage rate of the chemical conversion crystals was 98% or more relative to the surface area, the hot-rolled steel sheet was determined as being excellent in corrosion resistance and being successful. On the other hand, in a case where the coverage rate of the chemical conversion crystals was less than 98% relative to the surface area, the hot-rolled steel sheet was determined as not being excellent in corrosion resistance and not being successful.

[Table 1]

| Steel No. | Chemical composition (mass%) remainder being Fe and impurities | | | | | | | | | | | |
|---|---|---|---|---|---|---|---|---|---|---|---|---|
| | C | Si | Mn | sol.Al | Cr | P | S | N | O | Ti | Nb | V |
| A | 0.213 | 0.76 | 1.44 | 0.326 | 1.20 | 0.009 | 0.0044 | 0.0052 | 0.0034 | 0.091 | | |
| B | 0.052 | 0.78 | 1.51 | 0.324 | 1.16 | 0.009 | 0.0039 | 0.0049 | 0.0026 | 0.050 | | |
| C | 0.054 | 0.92 | 1.33 | 0.316 | 1.19 | 0.012 | 0.0042 | 0.0054 | 0.0030 | 0.221 | | |

(continued)

| Steel No. | Chemical composition (mass%) remainder being Fe and impurities | | | | | | | | | | | |
|---|---|---|---|---|---|---|---|---|---|---|---|---|
| | C | Si | Mn | sol.Al | Cr | P | S | N | O | Ti | Nb | V |
| D | 0.051 | 0.71 | 1.11 | 0.303 | 1.19 | 0.008 | 0.0038 | 0.0049 | 0.0031 | 0.103 | | |
| E | 0.042 | 0.71 | 1.31 | 0.331 | 1.18 | 0.008 | 0.0041 | 0.0049 | 0.0027 | 0.099 | | |
| F | 0.046 | 0.77 | 1.28 | 0.317 | 1.82 | 0.009 | 0.0037 | 0.0042 | 0.0037 | 0.111 | | |
| G | 0.053 | 0.79 | 1.30 | 0.306 | 0.71 | 0.010 | 0.0036 | 0.0052 | 0.0035 | 0.099 | | |
| H | 0.048 | 0.73 | 3.62 | 0.317 | 1.20 | 0.008 | 0.0038 | 0.0047 | 0.0031 | 0.098 | | |
| I | 0.050 | 0.80 | 1.29 | 0.327 | 1.17 | 0.008 | 0.0037 | 0.0048 | 0.0027 | 0.091 | | |
| J | 0.058 | 0.88 | 1.44 | 0.317 | 1.24 | 0.010 | 0.0042 | 0.0054 | 0.0027 | | | 0.166 |
| K | 0.052 | 0.83 | 1.18 | 0.110 | 1.19 | 0.009 | 0.0039 | 0.0047 | 0.0028 | 0.051 | 0.012 | 0.019 |
| L | 0.042 | 0.85 | 1.21 | 0.304 | 1.23 | 0.009 | 0.0044 | 0.0051 | 0.0028 | 0.097 | | |
| M | 0.053 | 0.70 | 1.22 | 0.310 | 1.15 | 0.009 | 0.0037 | 0.0053 | 0.0032 | 0.103 | | |
| N | 0.058 | 0.89 | 1.32 | 0.318 | 1.21 | 0.008 | 0.0043 | 0.0050 | 0.0031 | 0.109 | | |
| O | 0.056 | 0.47 | 1.28 | 0.322 | 1.23 | 0.008 | 0.0037 | 0.0048 | 0.0035 | 0.095 | | |
| P | 0.052 | 0.88 | 1.37 | 0.332 | 0.42 | 0.012 | 0.0042 | 0.0052 | 0.0031 | 0.109 | | |
| Q | 0.013 | 0.82 | 1.53 | 0.345 | 1.02 | 0.008 | 0.0037 | 0.0048 | 0.0035 | 0.092 | | |
| R | 0.299 | 0.83 | 1.36 | 0.318 | 0.98 | 0.011 | 0.0040 | 0.0050 | 0.0029 | 0.109 | | |
| S | 0.054 | 1.25 | 1.19 | 0.344 | 0.99 | 0.011 | 0.0042 | 0.0054 | 0.0026 | 0.103 | | |
| T | 0.056 | 0.78 | 4.60 | 0.332 | 1.02 | 0.011 | 0.0039 | 0.0047 | 0.0027 | 0.105 | | |
| U | 0.058 | 0.73 | 1.18 | 0.329 | 1.00 | 0.012 | 0.0039 | 0.0052 | 0.0033 | | | |
| V | 0.051 | 0.66 | 3.75 | 0.315 | 1.65 | 0.014 | 0.0031 | 0.0055 | 0.0029 | | | |
| Underlines indicate that values are outside the range of the present invention. | | | | | | | | | | | | |

[Table 2]

| Steel No. | Chemical composition (mass%) remainder being Fe and impurities | | | | | | | | | | | | | | |
| --- | --- | --- | --- | --- | --- | --- | --- | --- | --- | --- | --- | --- | --- | --- | --- |
| | Cu | Mo | Ni | B | Ca | Mg | REM | Bi | As | Zr | Co | Zn | W | Zr+Co+Zn+W | Sn |
| A | | | | | | | | 0.0040 | 0.038 | | | | | | |
| B | | | | | | | | | | | | | | | |
| C | | 0.18 | | | | | | | | | | 0.12 | | 0.12 | |
| D | | | | | | | | | | | 0.15 | | | 0.15 | |
| E | | | | | | | | | | 0.11 | | | | 0.11 | |
| F | | | | | | | | | | | | | 0.12 | 0.12 | |
| G | 0.24 | | | 0.0029 | | | | | | | | | | | |
| H | | | | | | | | | | | | | | | |
| I | | | | | | | | | | | | | | | 0.04 |
| J | | | 0.32 | | | | | | | | | | | | |
| K | | | | | | | | | | | | | | | |
| L | | | | | | | | | | | | | | | |
| M | | | | | 0.0028 | 0.0024 | | | | | | | | | |
| N | | | | | | | 0.0044 | | | | | | | | |
| O | | | | | | | | | | | | | | | |
| P | | | | | | | | | | | | | | | |
| Q | | | | | | | | | | | | | | | |
| R | | | | | | | | | | | | | | | |
| S | | | | | | | | | | | | | | | |
| T | | | | | | | | | | | | | | | |
| U | | | | | | | | | | | | | | | |
| V | | | | | | | | | | | | | | | |

Underlines indicate that values are outside the range of the present invention.

EP 4 644 578 A1

[Table 3A]

| Manufacturing No. | Steel No. | Retention time in temperature range of 700°C to 850°C | Heating temperature | Retention time in temperature range of 1100°C or higher | Number of times of descaling in temperature range of 1200°C or higher before rough rolling | Number of times of descaling in temperature range of 1150°C or higher during rough rolling | Maximum value of total rolling reduction between descaling in temperature range of 1150°C or higher during rough rolling | Maximum temperature from final stand of rolling where rolling reduction exceeds 20% to descaling after completion of rough rolling | Total rolling reduction in temperature range of 850°C to 1100°C | Loaded stress to steel sheet from completion of rolling at one stand before final stand to start of rolling at final stand | Note |
|---|---|---|---|---|---|---|---|---|---|---|---|
| | | s | °C | s | Times | Times | % | °C | % | kPa | |
| 1 | A | 1234 | 1238 | 8845 | 2 | 6 | 43 | 1067 | 96 | 223 | Present Invention Example |
| 2 | B | 1347 | 1237 | 9216 | 2 | 6 | 45 | 1093 | 94 | 233 | Present Invention Example |
| 3 | B | 809 | 1243 | 9385 | 2 | 6 | 45 | 1074 | 96 | 204 | Comparative Example |
| 4 | B | 1356 | 1237 | 5150 | 2 | 6 | 41 | 1073 | 93 | 214 | Comparative Example |
| 5 | B | 1287 | 1236 | 9211 | 0 | 6 | 44 | 1104 | 96 | 198 | Comparative Example |
| 6 | B | 1301 | 1239 | 9162 | 2 | 1 | 44 | 1056 | 93 | 214 | Comparative Example |
| 7 | B | 1206 | 1240 | 8954 | 2 | 6 | 34 | 1083 | 94 | 208 | Comparative Example |
| 8 | B | 1235 | 1238 | 9312 | 2 | 6 | 43 | 1141 | 94 | 207 | Comparative Example |
| 9 | B | 1221 | 1237 | 8805 | 2 | 6 | 41 | 1114 | 87 | 223 | Comparative Example |
| 10 | B | 1249 | 1243 | 9232 | 2 | 6 | 45 | 1097 | 93 | 148 | Comparative Example |
| 11 | B | 1342 | 1240 | 9187 | 2 | 6 | 45 | 1105 | 96 | 213 | Comparative Example |
| 12 | B | 1298 | 1241 | 9124 | 2 | 6 | 42 | 1076 | 97 | 209 | Comparative Example |
| 13 | B | 1269 | 1244 | 8973 | 2 | 6 | 41 | 1080 | 96 | 218 | Comparative Example |
| 14 | B | 1210 | 1235 | 9116 | 2 | 6 | 43 | 1057 | 95 | 221 | Present Invention Example |
| 15 | B | 1354 | 1241 | 9208 | 2 | 6 | 44 | 1076 | 96 | 215 | Comparative Example |
| 16 | B | 1226 | 1240 | 9170 | 2 | 6 | 44 | 1075 | 97 | 211 | Present Invention Example |
| 17 | B | 1221 | 1242 | 8920 | 2 | 6 | 43 | 1089 | 95 | 219 | Comparative Example |
| 18 | B | 1427 | 1243 | 9363 | 2 | 6 | 41 | 1079 | 94 | 217 | Present Invention Example |
| 19 | B | 1252 | 1245 | 8837 | 2 | 6 | 41 | 1087 | 96 | 217 | Present Invention Example |
| 20 | B | 1306 | 1241 | 8920 | 2 | 6 | 43 | 1082 | 95 | 199 | Comparative Example |
| 21 | B | 1291 | 1222 | 8820 | 2 | 6 | 42 | 1055 | 94 | 201 | Comparative Example |
| 22 | C | 1397 | 1239 | 9282 | 2 | 6 | 41 | 1073 | 95 | 199 | Present Invention Example |
| 23 | D | 1207 | 1245 | 8911 | 2 | 6 | 42 | 1073 | 96 | 195 | Present Invention Example |
| 24 | D | 1316 | 1238 | 9291 | 2 | 6 | 43 | 1086 | 93 | 206 | Comparative Example |

Underlines indicate that values are outside the range of the present invention or are not preferable manufacturing conditions.

[Table 3B]

| Manufacturing No. | Steel No. | Retention time in temperature range of 700°C to 850°C | Heating temperature | Retention time in temperature range of 1100°C or higher | Number of times of descaling in temperature range of 1200°C or higher before rough rolling | Number of times of descaling in temperature range of 1150°C or higher during rough rolling | Maximum value of total rolling reduction between descaling in temperature range of 1150°C or higher during rough rolling | Maximum temperature from final stand of rolling where rolling reduction exceeds 20% to descaling after completion of rough rolling | Total rolling reduction in temperature range of 850°C to 1100°C | Loaded stress to steel sheet from completion of rolling at one stand before final stand to start of rolling at final stand | Note |
|---|---|---|---|---|---|---|---|---|---|---|---|
| | | s | °C | s | Times | Times | % | °C | % | kPa | |
| 25 | D | 1280 | 1180 | 9463 | 2 | 6 | 41 | 1054 | 92 | 211 | Comparative Example |
| 26 | E | 1395 | 1241 | 9357 | 2 | 6 | 41 | 1061 | 96 | 217 | Present Invention Example |
| 27 | F | 1399 | 1233 | 8905 | 2 | 6 | 45 | 1070 | 95 | 201 | Present Invention Example |
| 28 | G | 1318 | 1245 | 9205 | 2 | 6 | 41 | 1070 | 96 | 219 | Present Invention Example |
| 29 | H | 1360 | 1233 | 8964 | 2 | 6 | 41 | 1088 | 95 | 219 | Present Invention Example |
| 30 | I | 1298 | 1237 | 8860 | 2 | 4 | 44 | 1066 | 96 | 208 | Present Invention Example |
| 31 | J | 1444 | 1238 | 9083 | 2 | 6 | 41 | 1100 | 96 | 207 | Present Invention Example |
| 32 | K | 1315 | 1244 | 9390 | 2 | 6 | 44 | 1078 | 93 | 205 | Present Invention Example |
| 33 | L | 1226 | 1238 | 8842 | 2 | 6 | 44 | 1091 | 97 | 199 | Present Invention Example |
| 34 | M | 1270 | 1239 | 9057 | 2 | 5 | 42 | 1096 | 94 | 202 | Present Invention Example |
| 35 | N | 1400 | 1242 | 8870 | 2 | 6 | 45 | 1092 | 93 | 211 | Present Invention Example |
| 36 | O | 1239 | 1241 | 9212 | 2 | 6 | 44 | 1096 | 93 | 210 | Present Invention Example |
| 37 | P | 1284 | 1241 | 9289 | 2 | 6 | 43 | 1093 | 96 | 213 | Comparative Example |
| 38 | Q | 1328 | 1236 | 9159 | 2 | 6 | 44 | 1080 | 96 | 203 | Comparative Example |
| 39 | R | 1435 | 1238 | 8881 | 2 | 6 | 44 | 1058 | 96 | 205 | Comparative Example |
| 40 | S | 1480 | 1241 | 9383 | 2 | 6 | 44 | 1097 | 96 | 216 | Comparative Example |
| 41 | T | 1237 | 1239 | 8969 | 2 | 6 | 41 | 1073 | 93 | 219 | Comparative Example |
| 42 | U | 1456 | 1236 | 9173 | 2 | 6 | 42 | 1059 | 97 | 213 | Present Invention Example |
| 43 | V | 1411 | 1246 | 8935 | 2 | 6 | 45 | 1063 | 95 | 222 | Present Invention Example |
| 44 | B | 1436 | 1231 | 9145 | 1 | 6 | 44 | 1076 | 93 | 201 | Present Invention Example |
| 45 | B | 1251 | 1244 | 9121 | 2 | 2 | 43 | 1059 | 96 | 199 | Present Invention Example |

Underlines indicate that values are outside the range of the present invention or are not preferable manufacturing conditions.

[Table 4A]

| Manufacturing No. | Steel No. | Finishing temperature Tf | Rolling reduction at final stand | Loaded stress to steel sheet from completion of rolling at final stand of hot rolling to steel sheet being cooled to 800°C | Average cooling rate from completion of hot rolling to 600°C | Start temperature of air cooling | Air cooling time | Average cooling rate in temperature range of 450°C to 600°C | Average cooling rate in temperature range of coiling temperature to 450°C | Coiling temperature | Note |
|---|---|---|---|---|---|---|---|---|---|---|---|
|  |  | °C | % | kPa | °C/s | °C | s | °C/s | °C/s | °C |  |
| 1 | A | 942 | 16 | 183 | 122 |  |  | 38 | 85 | 300 | Present Invention Example |
| 2 | B | 938 | 14 | 192 | 116 |  |  | 39 | 124 | 50 | Present Invention Example |
| 3 | B | 910 | 15 | 188 | 111 |  |  | 41 | 147 | 50 | Comparative Example |
| 4 | B | 939 | 13 | 183 | 111 |  |  | 40 | 131 | 50 | Comparative Example |
| 5 | B | 923 | 13 | 185 | 111 |  |  | 42 | 142 | 50 | Comparative Example |
| 6 | B | 926 | 17 | 190 | 118 |  |  | 40 | 143 | 50 | Comparative Example |
| 7 | B | 943 | 15 | 181 | 121 |  |  | 41 | 118 | 50 | Comparative Example |
| 8 | B | 917 | 15 | 180 | 113 |  |  | 38 | 155 | 50 | Comparative Example |
| 9 | B | 923 | 14 | 188 | 122 |  |  | 41 | 115 | 50 | Comparative Example |
| 10 | B | 930 | 16 | 179 | 110 |  |  | 41 | 134 | 50 | Comparative Example |
| 11 | B | 1044 | 16 | 192 | 121 |  |  | 38 | 103 | 50 | Comparative Example |
| 12 | B | 924 | 4 | 188 | 106 |  |  | 38 | 146 | 50 | Comparative Example |
| 13 | B | 945 | 15 | 216 | 121 |  |  | 42 | 119 | 50 | Comparative Example |
| 14 | B | 931 | 13 | 179 | 111 |  |  | 38 | 138 | 50 | Present Invention Example |
| 15 | B | 938 | 16 | 185 | 72 | 721 | 6.0 | 39 | 83 | 50 | Comparative Example |
| 16 | B | 939 | 13 | 188 | 108 |  |  | 38 | 130 | 50 | Present Invention Example |
| 17 | B | 923 | 14 | 181 | 22 |  |  | 42 | 117 | 50 | Comparative Example |
| 18 | B | 944 | 13 | 175 | 123 |  |  | 38 | 80 | 50 | Present Invention Example |
| 19 | B | 943 | 17 | 179 | 110 |  |  | 41 | 52 | 50 | Present Invention Example |
| 20 | B | 914 | 15 | 180 | 119 |  |  | 26 | 127 | 50 | Comparative Example |
| 21 | B | 910 | 16 | 179 | 106 |  |  | 61 | 111 | 50 | Comparative Example |
| 22 | C | 910 | 16 | 185 | 114 |  |  | 40 | 122 | 50 | Present Invention Example |
| 23 | D | 936 | 18 | 193 | 122 |  |  | 38 | 147 | 50 | Present Invention Example |
| 24 | D | 932 | 13 | 186 | 116 |  |  | 41 | 43 | 50 | Comparative Example |

Underlines indicate that values are outside the range of the present invention or are not preferable manufacturing conditions.

[Table 4B]

| Manufacturing No. | Steel No. | Finishing temperature Tf | Rolling reduction at final stand | Loaded stress to steel sheet from completion of rolling at final stand of hot rolling to steel sheet being cooled to 800°C | Average cooling rate from completion of hot rolling to 600°C | Start temperature of air cooling | Air cooling time | Average cooling rate in temperature range of 450°C to 600°C | Average cooling rate in temperature range of coiling temperature to 450°C | Coiling temperature | Note |
|---|---|---|---|---|---|---|---|---|---|---|---|
|  |  | °C | % | kPa | °C/s | °C | s | °C/s | °C/s | °C |  |
| 25 | D | 951 | 14 | 194 | 109 |  |  | 45 | 130 | 421 | Comparative Example |
| 26 | E | 916 | 16 | 179 | 107 |  |  | 42 | 141 | 50 | Present Invention Example |
| 27 | F | 930 | 14 | 194 | 102 |  |  | 41 | 62 | 50 | Present Invention Example |
| 28 | G | 917 | 15 | 187 | 111 |  |  | 39 | 150 | 50 | Present Invention Example |
| 29 | H | 914 | 15 | 190 | 118 |  |  | 39 | 147 | 50 | Present Invention Example |
| 30 | I | 910 | 13 | 187 | 111 |  |  | 39 | 140 | 50 | Present Invention Example |
| 31 | J | 927 | 13 | 192 | 121 |  |  | 40 | 127 | 50 | Present Invention Example |
| 32 | K | 947 | 16 | 177 | 105 |  |  | 38 | 90 | 50 | Present Invention Example |
| 33 | L | 932 | 15 | 190 | 118 |  |  | 39 | 143 | 50 | Present Invention Example |
| 34 | M | 941 | 17 | 193 | 112 |  |  | 41 | 99 | 50 | Present Invention Example |
| 35 | N | 940 | 14 | 178 | 109 |  |  | 41 | 98 | 50 | Present Invention Example |
| 36 | O | 920 | 15 | 186 | 108 |  |  | 39 | 137 | 50 | Present Invention Example |
| 37 | P | 941 | 13 | 177 | 118 |  |  | 41 | 101 | 50 | Comparative Example |
| 38 | Q | 914 | 14 | 179 | 124 |  |  | 41 | 123 | 50 | Comparative Example |
| 39 | R | 937 | 17 | 189 | 105 |  |  | 39 | 143 | 50 | Comparative Example |
| 40 | S | 944 | 16 | 183 | 123 |  |  | 41 | 75 | 300 | Comparative Example |
| 41 | T | 919 | 16 | 184 | 114 |  |  | 40 | 152 | 50 | Comparative Example |
| 42 | U | 925 | 14 | 187 | 118 |  |  | 41 | 115 | 50 | Present Invention Example |
| 43 | V | 930 | 14 | 178 | 107 |  |  | 39 | 120 | 50 | Present Invention Example |
| 44 | B | 921 | 15 | 188 | 110 |  |  | 40 | 111 | 50 | Present Invention Example |
| 45 | B | 911 | 16 | 181 | 114 |  |  | 42 | 99 | 50 | Present Invention Example |

Underlines indicate that values are outside the range of the present invention or are not preferable manufacturing conditions.

[Table 5A]

| Manufacturing No. | Steel No. | Sheet thickness | Ferrite | Residual austenite | Martensite and tempered martensite | Remainder in microstructure | E value | I value | CS value | Standard deviation of Mn concentrations | Number density of Si-Al-Cr oxides having circle equivalent radius of 0.500 μm or more | Number density of Si-Al-Cr oxides having circle equivalent radius of 0.005 μm to 0.050 μm | Note |
|---|---|---|---|---|---|---|---|---|---|---|---|---|---|
| | | mm | Area% | Area% | Area% | Area% | - | - | ×10⁵ | Mass% | ×10³ pieces/cm² | ×10⁵ pieces/cm² | |
| 1 | A | 1.4 | 0.0 | 1.3 | 93.7 | 5.0 | 11.0 | 1.019 | 3.4 | 0.51 | 1.2 | 11.6 | Present Invention Example |
| 2 | B | 2.9 | 0.8 | 0.0 | 96.5 | 2.7 | 11.4 | 1.003 | 3.9 | 0.45 | 1.0 | 11.0 | Present Invention Example |
| 3 | B | 2.9 | 2.1 | 0.0 | 93.9 | 4.0 | 11.7 | 1.014 | -5.4 | 0.66 | 1.3 | 7.7 | Comparative Example |
| 4 | B | 2.9 | 2.3 | 0.0 | 92.0 | 5.7 | 11.8 | 1.017 | -6.7 | 0.72 | 1.4 | 7.7 | Comparative Example |
| 5 | B | 2.9 | 2.3 | 0.0 | 95.6 | 2.1 | 11.1 | 1.009 | 2.5 | 0.42 | 2.6 | 8.9 | Comparative Example |
| 6 | B | 2.6 | 2.5 | 0.0 | 94.2 | 3.3 | 11.3 | 1.007 | -0.8 | 0.38 | 2.8 | 1.6 | Comparative Example |
| 7 | B | 2.9 | 2.7 | 0.0 | 95.9 | 1.4 | 11.6 | 1.005 | 5.3 | 0.33 | 3.6 | 12.9 | Comparative Example |
| 8 | B | 2.9 | 2.1 | 0.0 | 94.2 | 3.7 | 11.5 | 1.011 | 3.5 | 0.48 | 1.0 | 0.6 | Comparative Example |
| 9 | B | 2.9 | 4.2 | 0.0 | 92.7 | 3.1 | 11.4 | 1.001 | -4.7 | 0.82 | 1.1 | 14.9 | Comparative Example |
| 10 | B | 2.9 | 2.1 | 0.0 | 95.3 | 2.6 | 10.8 | 1.012 | -1.1 | 0.50 | 0.3 | 12.1 | Comparative Example |
| 11 | B | 2.9 | 4.4 | 0.0 | 92.4 | 3.2 | 10.6 | 1.018 | 1.7 | 0.48 | 1.4 | 13.1 | Comparative Example |
| 12 | B | 2.9 | 2.1 | 0.0 | 95.1 | 2.8 | 10.4 | 1.016 | -2.7 | 0.47 | 1.4 | 6.3 | Comparative Example |
| 13 | B | 2.9 | 2.8 | 0.0 | 94.4 | 2.8 | 10.6 | 1.010 | 6.2 | 0.34 | 1.5 | 13.3 | Comparative Example |
| 14 | B | 2.9 | 2.8 | 0.0 | 94.3 | 2.9 | 11.3 | 1.012 | -0.8 | 0.50 | 1.3 | 12.3 | Present Invention Example |
| 15 | B | 2.9 | 23.1 | 0.0 | 75.2 | 1.7 | 11.7 | 1.004 | 1.0 | 0.39 | 1.6 | 9.2 | Comparative Example |
| 16 | B | 2.9 | 2.3 | 0.0 | 96.2 | 1.5 | 11.0 | 1.003 | 5.7 | 0.37 | 1.4 | 6.5 | Present Invention Example |
| 17 | B | 2.9 | 10.2 | 0.0 | 81.6 | 8.2 | 11.6 | 1.023 | -3.8 | 0.50 | 1.4 | 9.4 | Comparative Example |
| 18 | B | 2.9 | 3.0 | 0.0 | 94.9 | 2.1 | 11.5 | 1.014 | 1.4 | 0.37 | 1.4 | 9.5 | Present Invention Example |
| 19 | B | 2.9 | 2.8 | 0.0 | 95.5 | 1.7 | 11.3 | 1.004 | 2.7 | 0.46 | 0.7 | 14.3 | Present Invention Example |
| 20 | B | 2.9 | 2.9 | 0.0 | 95.0 | 2.1 | 11.4 | 1.001 | -10.4 | 0.46 | 1.6 | 10.0 | Comparative Example |
| 21 | B | 2.9 | 2.3 | 0.0 | 94.2 | 3.5 | 11.4 | 1.002 | 9.8 | 0.37 | 0.5 | 8.7 | Comparative Example |
| 22 | C | 2.4 | 2.2 | 0.0 | 96.0 | 1.8 | 11.3 | 1.002 | -1.6 | 0.34 | 1.2 | 9.6 | Present Invention Example |
| 23 | D | 2.6 | 2.8 | 0.0 | 94.1 | 3.1 | 11.9 | 1.011 | 2.6 | 0.42 | 1.0 | 8.7 | Present Invention Example |

Underlines indicate that values are outside the range of the present invention or properties are not preferable.

[Table 5B]

| Manufacturing No. | Steel No. | Sheet thickness | Ferrite | Residual austenite | Martensite and tempered martensite | Remainder in microstructure | E value | I value | CS value | Standard deviation of Mn concentrations | Number density of Si-Al-Cr oxides having circle equivalent radius of 0.500 μm or more | Number density of Si-Al-Cr oxides having circle equivalent radius of 0.005 μm to 0.050 μm | Note |
|---|---|---|---|---|---|---|---|---|---|---|---|---|---|
| | | mm | Area% | Area% | Area% | Area% | - | - | ×10⁵ | Mass% | ×10³ pieces/cm² | ×10⁵ pieces/cm² | |
| 24 | D | 2.6 | 3.6 | 3.2 | 85.0 | 8.2 | 11.9 | 1.009 | 4.5 | 0.42 | 1.7 | 10.4 | Comparative Example |
| 25 | D | 2.6 | 0.0 | 0.0 | 92.3 | 7.7 | 11.9 | 1.022 | 0.5 | 0.39 | 1.2 | 12.3 | Comparative Example |
| 26 | E | 2.6 | 2.6 | 0.0 | 93.3 | 4.1 | 11.8 | 1.013 | 6.0 | 0.39 | 1.2 | 6.7 | Present Invention Example |
| 27 | F | 2.7 | 0.9 | 0.0 | 96.1 | 3.0 | 11.2 | 1.015 | -1.2 | 0.39 | 0.6 | 5.1 | Present Invention Example |
| 28 | G | 2.6 | 2.7 | 0.0 | 94.9 | 2.4 | 11.7 | 1.016 | -2.9 | 0.36 | 0.4 | 1.3 | Present Invention Example |
| 29 | H | 2.4 | 0.0 | 0.0 | 95.7 | 4.3 | 11.9 | 1.009 | 6.5 | 0.47 | 1.3 | 11.8 | Present Invention Example |
| 30 | I | 2.6 | 2.4 | 0.0 | 94.3 | 3.3 | 11.5 | 1.012 | 6.2 | 0.41 | 1.3 | 7.8 | Present Invention Example |
| 31 | J | 2.6 | 2.1 | 0.0 | 95.5 | 2.4 | 11.2 | 1.012 | 6.1 | 0.45 | 1.0 | 12.1 | Present Invention Example |
| 32 | K | 2.7 | 1.9 | 0.0 | 93.0 | 5.1 | 11.5 | 1.009 | 6.5 | 0.33 | 1.6 | 7.8 | Present Invention Example |
| 33 | L | 4.7 | 2.4 | 0.0 | 95.4 | 2.2 | 11.1 | 1.017 | -5.0 | 0.42 | 0.7 | 12.2 | Present Invention Example |
| 34 | M | 2.9 | 2.3 | 0.0 | 94.8 | 2.9 | 11.4 | 1.014 | -1.6 | 0.41 | 1.2 | 5.6 | Present Invention Example |
| 35 | N | 2.6 | 2.1 | 0.0 | 94.3 | 3.6 | 11.7 | 1.016 | 2.8 | 0.40 | 1.2 | 5.1 | Present Invention Example |
| 36 | O | 2.6 | 2.7 | 0.0 | 93.5 | 3.8 | 11.6 | 1.018 | 4.3 | 0.36 | 0.3 | 6.8 | Present Invention Example |
| 37 | P | 2.6 | 3.1 | 0.0 | 94.2 | 2.7 | 11.5 | 1.013 | -2.3 | 0.41 | 0.9 | 0.7 | Comparative Example |
| 38 | Q | 2.6 | 5.8 | 0.0 | 74.0 | 20.2 | 11.6 | 1.018 | 1.8 | 0.35 | 1.6 | 9.0 | Comparative Example |
| 39 | R | 2.8 | 0.0 | 0.0 | 99.8 | 0.2 | 10.1 | 1.019 | -6.6 | 0.48 | 1.6 | 12.4 | Comparative Example |
| 40 | S | 2.6 | 6.4 | 2.4 | 91.2 | 0.0 | 11.3 | 1.007 | -2.8 | 0.49 | 0.8 | 11.0 | Comparative Example |
| 41 | T | 2.6 | 0.0 | 0.0 | 93.0 | 7.0 | 11.2 | 1.011 | 6.7 | 0.67 | 0.8 | 11.2 | Comparative Example |
| 42 | U | 2.6 | 1.0 | 0.0 | 97.1 | 1.9 | 11.3 | 1.007 | -2.7 | 0.39 | 1.6 | 8.9 | Present Invention Example |
| 43 | V | 2.4 | 2.3 | 2.7 | 93.2 | 1.8 | 11.1 | 1.015 | -2.8 | 0.54 | 1.5 | 9.9 | Present Invention Example |
| 44 | B | 2.9 | 1.5 | 0.0 | 94.2 | 4.3 | 11.5 | 1.011 | -6.5 | 0.36 | 1.8 | 7.2 | Present Invention Example |
| 45 | B | 2.9 | 2.1 | 0.0 | 94.0 | 3.9 | 11.3 | 1.013 | -7.8 | 0.31 | 1.9 | 8.9 | Present Invention Example |

Underlines indicate that values are outside the range of the present invention or properties are not preferable.

[Table 6]

| Manufacturing No. | Steel No. | Tensile strength TS | Hole expansion ratio | Maximum value of linearity of boundary between fractured surface and sheared surface at end surface | Limit fracture sheet thickness reduction ratio | Coverage rate of chemical conversion crystals | Note |
|---|---|---|---|---|---|---|---|
| | | MPa | % | - | % | % | |
| 1 | A | 1524 | 62 | 1.035 | 84.4 | 100 | Present Invention Example |
| 2 | B | 1067 | 74 | 1.044 | 87.8 | 100 | Present Invention Example |
| 3 | B | 990 | 58 | 1.052 | 81.7 | 100 | Comparative Example |
| 4 | B | 994 | 62 | 1.056 | 77.4 | 100 | Comparative Example |
| 5 | B | 989 | 60 | 1.041 | 88.0 | 93 | Comparative Example |
| 6 | B | 997 | 69 | 1.036 | 77.8 | 96 | Comparative Example |
| 7 | B | 993 | 57 | 1.038 | 75.8 | 97 | Comparative Example |
| 8 | B | 990 | 59 | 1.040 | 75.4 | 93 | Comparative Example |
| 9 | B | 983 | 61 | 1.055 | 82.4 | 100 | Comparative Example |
| 10 | B | 989 | 55 | 1.064 | 78.1 | 100 | Comparative Example |
| 11 | B | 984 | 61 | 1.048 | 80.6 | 100 | Comparative Example |
| 12 | B | 995 | 64 | 1.059 | 79.6 | 100 | Comparative Example |
| 13 | B | 981 | 63 | 1.063 | 81.4 | 100 | Comparative Example |
| 14 | B | 999 | 59 | 1.033 | 88.7 | 100 | Present Invention Example |
| 15 | B | 942 | 65 | 1.078 | 86.2 | 100 | Comparative Example |
| 16 | B | 1001 | 58 | 1.041 | 81.6 | 100 | Present Invention Example |
| 17 | B | 959 | 56 | 1.055 | 78.6 | 100 | Comparative Example |
| 18 | B | 980 | 56 | 1.042 | 78.7 | 99 | Present Invention Example |
| 19 | B | 997 | 60 | 1.029 | 77.5 | 100 | Present Invention Example |
| 20 | B | 998 | 60 | 1.038 | 54.6 | 100 | Comparative Example |
| 21 | B | 992 | 57 | 1.034 | 48.9 | 100 | Comparative Example |
| 22 | C | 986 | 62 | 1.027 | 77.4 | 100 | Present Invention Example |
| 23 | D | 999 | 67 | 1.036 | 79.0 | 98 | Present Invention Example |
| 24 | D | 955 | 59 | 1.062 | 81.2 | 100 | Comparative Example |
| 25 | D | 996 | 56 | 1.048 | 86.0 | 100 | Comparative Example |
| 26 | E | 1018 | 70 | 1.043 | 81.8 | 98 | Present Invention Example |
| 27 | F | 1006 | 59 | 1.037 | 87.5 | 98 | Present Invention Example |
| 28 | G | 1008 | 69 | 1.035 | 82.3 | 98 | Present Invention Example |
| 29 | H | 1235 | 62 | 1.041 | 89.4 | 99 | Present Invention Example |
| 30 | I | 983 | 62 | 1.036 | 76.3 | 100 | Present Invention Example |
| 31 | J | 1334 | 55 | 1.038 | 77.8 | 100 | Present Invention Example |
| 32 | K | 990 | 64 | 1.039 | 84.0 | 100 | Present Invention Example |
| 33 | L | 983 | 61 | 1.041 | 79.1 | 100 | Present Invention Example |
| 34 | M | 985 | 69 | 1.039 | 78.2 | 100 | Present Invention Example |
| 35 | N | 996 | 64 | 1.042 | 80.1 | 100 | Present Invention Example |
| 36 | O | 994 | 58 | 1.037 | 78.6 | 100 | Present Invention Example |
| 37 | P | 984 | 58 | 1.040 | 83.7 | 96 | Comparative Example |
| 38 | Q | 864 | 42 | 1.057 | 81.0 | 100 | Comparative Example |
| 39 | R | 1801 | 58 | 1.060 | 77.0 | 100 | Comparative Example |
| 40 | S | 971 | 59 | 1.047 | 82.3 | 93 | Comparative Example |
| 41 | T | 1149 | 61 | 1.058 | 83.5 | 100 | Comparative Example |
| 42 | U | 1045 | 75 | 1.039 | 86.7 | 100 | Present Invention Example |
| 43 | V | 982 | 65 | 1.043 | 87.0 | 99 | Present Invention Example |
| 44 | B | 990 | 56 | 1.036 | 88.2 | 100 | Present Invention Example |
| 45 | B | 987 | 60 | 1.033 | 89.4 | 100 | Present Invention Example |

Underlines indicate that values are outside the range of the present invention or properties are not preferable.

From Table 5A to Table 6, it is found that the hot-rolled steel sheets according to the present invention examples have high strength and limit fracture sheet thickness reduction ratio, excellent hole expansibility, shearing property, and corrosion resistance.

On the other hand, it is found that the hot-rolled steel sheets according to the comparative examples were deteriorated in one or more of the above properties.

INDUSTRIAL APPLICABILITY

According to the above aspect according to the present invention, it is possible to obtain a hot-rolled steel sheet having high strength and limit fracture sheet thickness reduction ratio, excellent hole expansibility, shearing property, and corrosion resistance.

The hot-rolled steel sheet according to the above aspect of the present invention is suitable as an industrial material used for vehicle members, mechanical structural members, and building members.

**Claims**

1. A hot-rolled steel sheet comprising, in terms of mass%, as a chemical composition:

C: 0.040% to 0.250%,
Si: 0.40% to 1.00%,
Mn: 1.00% to 4.00%,
sol. Al: 0.100% to 0.500%,
Cr: 0.50% to 2.00%,
P: 0.100% or less,
S: 0.0300% or less,
N: 0.1000% or less,
O: 0.0100% or less,
Ti: 0% to 0.300%,
Nb: 0% to 0.100%,
V: 0% to 0.500%,
Cu: 0% to 2.00%,
Mo: 0% to 1.00%,
Ni: 0% to 2.00%,
B: 0% to 0.0100%;
Ca: 0% to 0.0200%;
Mg: 0% to 0.0200%;
REM: 0% to 0.1000%;
Bi: 0% to 0.0200%;
As: 0% to 0.100%;
Zr: 0% to 1.00%;
Co: 0% to 1.00%;
Zn: 0% to 1.00%;
W: 0% to 1.00%;
Sn: 0% to 0.05%;
a remainder comprising Fe and impurities, and
the following formula (A) is satisfied,
wherein, in a microstructure at a position of 1/4 from a surface in a sheet thickness direction,
in terms of area%,
martensite and tempered martensite is more than 92.0% and 100.0% or less in total,
residual austenite is less than 3.0%,
ferrite is less than 5.0%, and
an Entropy value indicated by the following formula (1) is 11.0 or more, an Inverse difference normalized value indicated by the following formula (2) is less than 1.020, and a Cluster Shade value indicated by the following formula (3) is $-8.0 \times 10^5$ to $8.0 \times 10^5$, which are obtained by analyzing SEM images of the microstructure with a gray level co-occurrence matrices method,
a standard deviation of Mn concentrations is 0.60 mass% or less,
at the surface, a number density of Si-Al-Cr oxides having a circle equivalent radius of 0.500 $\mu$m or more is $2.0 \times 10^3$ pieces/cm$^2$ or less, and a number density of Si-Al-Cr oxides having a circle equivalent radius of 0.005 $\mu$m to 0.050 $\mu$m is $1.0 \times 10^5$ pieces/cm$^2$ or more,

$$Zr+Co+Zn+W \leq 1.00\% \ldots(A),$$

here, each element symbol in the formula (A) indicates the content of the element in terms of mass %, and 0 is substituted when the element is not contained,

P(i,j) in the following formulas (1) to (5) is a gray level co-occurrence matrix, L in the following formula (2) is possible Quantization levels of grayscale of the SEM images, i and j in the following formulas (2) and (3) are natural numbers from 1 to the L, $\mu_x$ and $\mu_y$ in the following formula (3) are indicated by the in the following formulas (4) and (5).

[Formula 1]

$$Entropy = -\sum_i \sum_j P(i,j) . \log\big(P(i,j)\big) \qquad \cdots \ (1)$$

[Formula 2]

$$Inverse\ difference\ normalized = \sum_i \sum_j \frac{P(i,j)}{1 + \dfrac{|i-j|}{L}} \qquad \cdots \ (2)$$

[Formula 3]

$$Cluster\ Shade = \sum_i \sum_j \big(i + j - \mu_x - \mu_y\big)^3 P(i,j) \qquad \cdots \ (3)$$

[Formula 4]

$$\mu_x = \sum_i \sum_j i\big(P(i,j)\big) \qquad \cdots \ (4)$$

[Formula 5]

$$\mu_y = \sum_i \sum_j j\big(P(i,j)\big) \qquad \cdots \ (5)$$

2. The hot-rolled steel sheet according to claim 1, wherein the chemical composition comprises, in terms of mass%, one or two or more selected from the group consisting of:

Ti: 0.001% to 0.300%,
Nb: 0.001 % to 0.100%,
V: 0.001 % to 0.500%,
Cu: 0.01% to 2.00%,
Mo: 0.01% to 1.00%,
Ni: 0.02% to 2.00%,
B: 0.0001% to 0.0100%;
Ca: 0.0005% to 0.0200%;
Mg: 0.0005% to 0.0200%;
REM: 0.0005% to 0.1000%;
Bi: 0.0005% to 0.0200%;
As: 0.001% to 0.100%;
Zr: 0.01% to 1.00%;
Co: 0.01% to 1.00%;
Zn: 0.01% to 1.00%;

W: 0.01% to 1.00%; and
Sn: 0.01% to 0.05%.

FIG. 1

(a)　　　　　(b)

SHEAR DROOP

SHEARED SURFACE

A　　B

y

x

FRACTURED
SURFACE

BURR

**EP 4 644 578 A1**

## INTERNATIONAL SEARCH REPORT

| International application No. |
|---|
| **PCT/JP2023/031972** |

| | | |
|---|---|---|
| **A.** | **CLASSIFICATION OF SUBJECT MATTER** | |

*C22C 38/00*(2006.01)i; *C21D 8/02*(2006.01)i; *C21D 9/46*(2006.01)i; *C22C 38/58*(2006.01)i
FI:   C22C38/00 301W; C22C38/58; C21D8/02 A; C21D9/46 T

According to International Patent Classification (IPC) or to both national classification and IPC

| | |
|---|---|
| **B.** | **FIELDS SEARCHED** |

Minimum documentation searched (classification system followed by classification symbols)

C22C38/00-38/00; C21D8/02; C21D9/46

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | WO 2022/044492 A1 (NIPPON STEEL CORPORATION) 03 March 2022 (2022-03-03)<br>claims | 1-2 |
| A | JP 2015-196891 A (NIPPON STEEL & SUMITOMO METAL CORPORATION) 09 November 2015 (2015-11-09)<br>claims | 1-2 |
| A | JP 4-79722 B2 (HITACHI, LTD.) 16 December 1992 (1992-12-16) | 1-2 |
| P, A | WO 2023/063014 A1 (NIPPON STEEL CORPORATION) 20 April 2023 (2023-04-20)<br>claims | 1-2 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 November 2023** | **21 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

31

**INTERNATIONAL SEARCH REPORT**
Information on patent family members

International application No.

**PCT/JP2023/031972**

| Patent document cited in search report | | | Publication date (day/month/year) | Patent family member(s) | | | Publication date (day/month/year) |
|---|---|---|---|---|---|---|---|
| WO | 2022/044492 | A1 | 03 March 2022 | EP claims CN | 4180545 115943224 | A1 A | |
| JP | 2015-196891 | A | 09 November 2015 | (Family: none) | | | |
| JP | 4-79722 | B2 | 16 December 1992 | (Family: none) | | | |
| WO | 2023/063014 | A1 | 20 April 2023 | (Family: none) | | | |

Form PCT/ISA/210 (patent family annex) (January 2015)

**EP 4 644 578 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022208520 A
- WO 2020044445 A
- SU 6600

**Non-patent literature cited in the description**

- **J. WEBEL** ; **J. GOLA** ; **D. BRITZ** ; **F. MUCKLICH**. *Materials Characterization*, 2018, vol. 144, 584-596
- **D. L. NAIK** ; **H. U. SAJID** ; **R. KIRAN**. *Metals*, 2019, vol. 9, 546
- Contrast Limited Adaptive Histogram Equalization. **K. ZUIDERVELD**. Graphics Gems IV. Academic Press, 1994, vol. VIII. 5, 474-485